(19) Europäisches Patentamt
European Patent Office
Office européen des brevets

(11) **EP 1 876 745 B1**

(12) **EUROPEAN PATENT SPECIFICATION**

(45) Date of publication and mention
of the grant of the patent:
**16.03.2011 Bulletin 2011/11**

(51) Int Cl.:
*H04L 27/34* $^{(2006.01)}$    *H04L 1/00* $^{(2006.01)}$

(21) Application number: **07020840.0**

(22) Date of filing: **03.03.2004**

(54) **Apparatus and method for providing a set of channel input symbols and apparatus and method for providing a plurality of information bits**

Gerät und Verfahren zum Generieren einer Menge von Kanaleingangssymbolen und Gerät und Verfahren zum Generieren von Informationsbits

Appareil et procédé pour la fourniture d'un ensemble de symboles d'entrée de canal et appareil et procédé pour la fourniture d'une pluralité de bits d'information

(84) Designated Contracting States:
**DE GB**

(30) Priority: **13.01.2004 EP 04000539**

(43) Date of publication of application:
**09.01.2008 Bulletin 2008/02**

(62) Document number(s) of the earlier application(s) in accordance with Art. 76 EPC:
**04716573.3 / 1 733 526**

(73) Proprietor: **NTT DoCoMo, Inc.**
**Tokyo (JP)**

(72) Inventors:
• **Schreckenbach, Frank**
**80799 Munich (DE)**
• **Hagenauer, Joachim**
**82229 Seefeld (DE)**
• **Bauch, Gerhard**
**80799 Munich (DE)**

(74) Representative: **Schenk, Markus et al**
**Schoppe, Zimmermann, Stöckeler & Zinkler**
**Patentanwälte**
**Postfach 246**
**82043 Pullach bei München (DE)**

(56) References cited:
• **ORMECI P; XUETING LIU; GOECKEL D L; WESEL R D: "Adaptive bit-interleaved coded modulation"** IEEE TRANSACTIONS ON COMMUNICATIONS, September 2001 (2001-09), pages 1572-1581, XP002301155

• **DIVSALAR D ET AL: "ITERATIVE TURBO DECODER ANALYSIS BASED ON DENSITY EVOLUTION"** IEEE JOURNAL ON SELECTED AREAS IN COMMUNICATIONS, IEEE INC. NEW YORK, US, vol. 19, no. 5, May 2001 (2001-05), pages 891-907, XP001101009 ISSN: 0733-8716

• **TUECHLER M ET AL: "EXIT CHARTS OF IRREGULAR CODES"** PROCEEDINGS OF THE ANNUAL PRINCETON CONFERENCE ON INFORMATION SCIENCES AND SYSTEMS, XX, XX, 20 March 2002 (2002-03-20), pages 748-753, XP009021981

• **TUCHLER M ED - INSTITUTE OF ELECTRICAL AND ELECTRONICS ENGINEERS: "Design of serially concatenated systems for long or short block lengths"** ICC 2003. 2003 IEEE INTERNATIONAL CONFERENCE ON COMMUNICATIONS. ANCHORAGE, AK, MAY 11 - 15, 2003, IEEE INTERNATIONAL CONFERENCE ON COMMUNICATIONS, NEW YORK, NY : IEEE, US, vol. VOL. 1 OF 5, 11 May 2003 (2003-05-11), pages 2948-2952, XP010642985 ISBN: 0-7803-7802-4

• **SCHRECKENBACH F ET AL: "Optimized symbol mappings for bit-interleaved coded modulation with iterative decoding"** GLOBECOM 2003, vol. 6, 1 December 2003 (2003-12-01), pages 3316-3320, XP010678408

EP 1 876 745 B1

- ONGGOSANUSI E N ET AL: "Turbo trellis-coded modulation with time varying mixed mapping" VTC FALL 2001. IEEE 54TH. VEHICULAR TECHNOLOGY CONFERENCE. PROCEEDINGS. ATLANTIC CITY, NJ, OCT. 7 - 11, 2001; [IEEE VEHICULAR TECHNOLGY CONFERENCE], NEW YORK, NY : IEEE, US, vol. 4, 7 October 2001 (2001-10-07), pages 2409-2413, XP010562403 ISBN: 978-0-7803-7005-0

- LI X ET AL: "TRELLIS-CODED MODULATION WITH BIT INTERLEAVING AND ITERATIVE DOCODING" IEEE JOURNAL ON SELECTED AREAS IN COMMUNICATIONS, IEEE SERVICE CENTER, PISCATAWAY, US, vol. 17, no. 4, 1 April 1999 (1999-04-01), pages 715-724, XP000824314 ISSN: 0733-8716

**Description**

The present invention is in the field of telecommunications and, in particular, in the field of information transmission through communication channels.

In order to transmit information through a communication channel, information bits have to be encoded in order to protect the information from channel influences. After encoding, encoded bits are usually interleaved and the interleaved bits are mapped or modulated onto complex signal space constellation points belonging to, for example, QAM (Quadrature Amplitude Modulation) constellation, in order to provide channel input symbols transmittable through the communication channel. However, a capacity of the communication channel measured in a number of information bits per channel input symbol is limited by the available channel bandwidth, by channel noise and by the maximum allowable transmit power. Hence, an information throughput is limited.

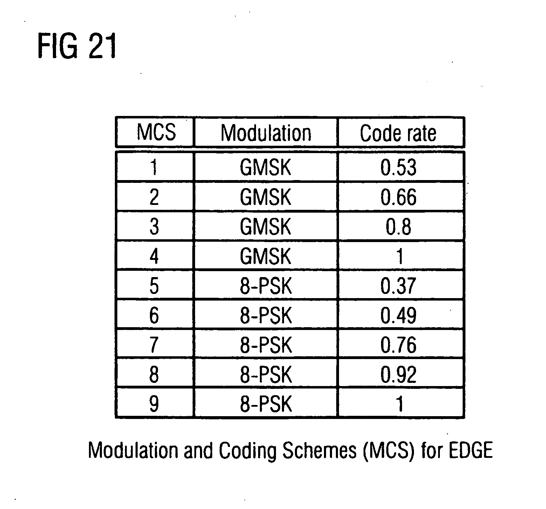

In order to optimize the throughput, several solutions have been proposed by several standardization bodies. For example, Adaptive Modulation and Coding (AMC) has been standardized in the latest 2G (second generation) and 3G (third generation) releases. An enhanced data for GSM evolution (EDGE) extends the General Packet Radio Services (GPRS) system with the GSM framework by AMC in order to increase the data rate. To do so, nine modulation and coding schemes have been specified. The code rates can vary between approximately 1/3 and 1/1 through puncturing of a rate 1/3 code. The modulation is GMSK (Gaussian minimum shift keying) or 8-PSK (phase shift keying). In Fig. 21, different modulation and coding schemes (MCS) for EDGE are shown.

For 3G systems, HSDPA (High-Speed Downlink Packet Access) has been specified with AMC instead of fast power control and variable spreading factor to increase the data throughput. Depending on the user equipment (UE) capabilities, 30 modulation and coding schemes have been specified. The code rate can vary between approximately 1/6 and 1/1 for puncturing and repetition of the rate 1/3 code. The modulation can be switched between QPSK (Quaternary Phase Shift Keying) and 16-QAM. Concerning the trade-off throughput versus complexity versus error rate, EDGE uses a convolutional code with Gray mapping and HSDPA uses a turbo code with a fixed number of iterations with Gray mapping. However, no further adaptation is possible.

In order to optimize the throughput, so-called irregular codes, as described in M. Luby, M. Mitzenmacher, A. Shokrollahi, D. Spielman, V. Stemann, "Practical Loss-Resilient Codes" in Proc. 29th Annu. ACM Symp. Theory of Computing, 1997, pp 150-159 or B. Frey and D. MacKay, "Irregular turbo-like codes" and 2nd Intern. Symposium on Turbo codes, Brest, France, September 2000, pp. 67-72, and in M. Tüchler and J. Hagenauer, "Exit charts of irregular codes" in Conference on Information Sciences and Systems (CISS), Princeton University, March 2002, for serial and parallel concatenated convolutional codes may be applied. In T. Richardson and R. Urbanke, "Design of low desity (sic) parity-check codes," IEEE Transactions on Information Theory, vol. 47, pp. 619-637, February 2001, Low Density Parity Check (LDPC) codes are described, which allow an optimization of the iterative decoding behavior of concatenated codes. An irregular code in this context consists of subcodes with different code rates used to encode fractions of the data bits within one data block. However the AMC concept suffers from the disadvantage, that a more flexible adaptation to the channel quality is only possible, if, beside the code rate, several options for the modulation scheme are available. That means, that for a certain code rate, a certain, matched, modulation scheme would have to be applied. In this case, a transmitter's complexity would increase, since a plurality of modulation schemes, for example QPSK, 8-PSK, 16-QAM, 32-QAM etc. would have to be supported. A further disadvantage of the prior art approaches results from the fact, that only a "hard" switch between different modulation schemes can be performed. Therefore, a fine adaptation of the throughput is terms of adapting a number of information bits per channel input symbol cannot be performed. For example, if a QPSK modulation scheme is used to modulate a set comprising coded bit resulting from encoding information bits using an encoding scheme having a certain coding rate, then only two coded bits can be mapped onto a complex signal space constellation point representing a channel input symbol. This results in an inefficient exploitation of the available bandwidth since a fine adaptation to the available channel capacity is not possible.

In order to more efficiently exploit the channel capacity, a different encoding scheme having a different code rate or a puncturing scheme can be applied. This concept allows a course adaptation, since not every fraction of information bits per channel input symbol, for example 0.658 can be obtained. The further limitation results from the fact, that allowable, and therefore possible, puncturing schemes and code rates are predefined in communication standards. Therefore, also the course adaptation possibilities associated with the prior art approaches are limited. The prior approaches suffer furthermore from the fact, that often a full channel information as a channel state information, for example the current channel impulse response is necessary in order to perform the adaptation.

Pinar Örmeci et al.: "Adapted Bit-Interleaved Coded Modulation", IEE Transactions on Communications, September 2001, pages 1572-1581 discloses an adaptive BICM transmitter having a convolutional encoder, a bit interleaver, a modulator and an element for choosing a signal set tob e used for mapping the output of the bit interleaver onto signals.

ONGGOSANUSI E N ET AL: "Turbo trellis-coded modulation with time varying mixed mapping" VTC FALL 2001. IEEE 54TH. VEHICULAR TECHNOLOGY CONFERENCE. PROCEEDINGS. ATLANTIC CITY, NJ, OCT. 7 - 11, 2001; [IEEE VEHICULAR TECHNOLGY CONFERENCE], NEW YORK, NY : IEEE, US, vol. 4, 7 October 2001 (2001-10-07), pages 2409-2413, XP010562403 ISBN: 978-0-7803-7005-0 describes a technique to control the trade-off between the error floor and the waterfall performance of parallel concatenated trellis-coded modulation (PCTCM), which is also known as turbo TCM, via the choice of coded-bits-to-signal mapping for a fixed component code. It is demonstrated that different choice of mapping leads to different error floor and waterfall performance. One mapping may have the lowest error floor but result in poor waterfall performance, while another mapping may achieve the opposite. A time-varying mixed mapping scheme for PCTCM systems is presented. The proposed mixed mapping scheme enables to generate a set of turbo trellis codes from two choices of coded-bits-to-signal mapping with various waterfall performance and error floor.

It is the object of the present invention to provide an efficient concept for a fine adaptation of the information throughput.

This object is achieved by an apparatus for providing a set of channel input symbols in accordance with claim 1 or by an apparatus for providing a plurality of information bits from a set of channel output symbols in accordance with claim 5 or by a method for providing a set of channel input symbols in accordance with claim 14 or by a method for providing a plurality of information bits in accordance with claim 15 or by a computer program in accordance with claim 16.

The present invention is based on the finding, that a fine adaptation of the information throughput can be performed, when a transmission of any number of coded bits per set of channel input symbols, i.e. a transmission of any number of information bits per set of channel input symbols comprising a plurality of channel input symbols can be achieved.

In particular, it has been found, that the information throughput can be fine adapted when a set of channel input symbols is obtained from applying at least two different modulation schemes or different mapping schemes to subsequent sub-sets of coded bits, wherein the subsequent sub-sets of coded bits are obtained from assigning subsequent groups of successive coded bits of a set of coded bits to the subsequent sub-sets of coded bits. In accordance with the present invention, the different characteristics of different modulation or mapping schemes are combined within one set of coded bits (one block of coded bits), so that the set of channel input symbols has an average number of bits per channel input symbol which can be any desired average number of information bits per channel input symbol in the set of channel input symbols. The average number of bits per channel input symbol can be obtained by, for example, adding all information bits assigned to all channel input symbols comprised in the set of channel input symbols and dividing a result of the addition by a number of channel input symbols in the set of channel input symbols.

In accordance with the present invention, the characteristics of all possible modulation schemes can be generated out of the combination of a minimum of two modulation schemes. Thus, a transmitter and a receiver must support only the two modulation schemes.

If a high number of bits are used to characterize the ratios of the underlying modulation schemes, an arbitrary accurate adaptation to the communication channel can be achieved. Instead of a "hard" switch between different modulation schemes, a "soft" adaptation scheme is provided. Therefore, any adaptation of the information throughput can be achieved without significantly increasing a complexity of the receiver or transmitter architectures. Moreover, since the characteristics of different modulation schemes are exploited in order to achieve the desired average number of bits per channel input symbol in the set of channel input symbols, the inventive concept can be implemented within any standard conform transmission platform, since, in accordance with the present invention, a merging of any modulation or mapping schemes is possible in order to obtain the average number of information bits. Furthermore it is a further advantage of the present invention, that the fine adaptation of the information throughput can be adjusted to a code rate of a coder being applied for encoding information bits to provided coded bits without any necessity of altering the coding scheme by for example puncturing etc. Therefore, the inventive concepts can be applied for a fine adaptation of the information throughput in combination with any encoding scheme.

Moreover, since any average number of information bits per channel input symbol can be achieved, the inventive fine adaptation approach allows a more efficient bandwidth exploitation since the average number of information bits per channel input symbol can be increased in fine steps so that a better approximation to the achievable number of information bits per channel input symbol, which is limited by the channel capacity, can be achieved.

By irregular decoding and/or mapping, out of low number of mappings or precoder, a large set of possibilities is given through combination of the underlying systems. Thus, the complexity and error rate requirements can easily be realized in an accurate way. The convergence of the inventive system can further be optimized using irregular schemes due to a high number of combination possibilities. Furthermore, it is easier to switch between mappings or precoder than to switch the memory of the outer channel code in order to select the error rate performance for a given complexity.

Preferred embodiments of the present invention are described in detail with respect to the following figures, in which:

Fig. 1     shows a block diagram of the inventive apparatus for providing a set of channel input symbols in accordance with a first embodiment of the present invention;

Fig. 2      shows a block diagram of the inventive apparatus for providing a set of channel input symbols in accordance with a further embodiment of the present invention;

Fig. 3      shows a block diagram of the inventive apparatus for providing a plurality of information bits in accordance with a first embodiment of the present invention;

Fig. 4      shows the inventive apparatus for providing a plurality of information bits in accordance with a further embodiment of the present invention;

Fig. 5      shows the inventive system model in accordance with a further embodiment of the present invention;

Fig. 6      shows the inventive system model in accordance with a further embodiment of the present invention;

Fig. 7      shows different transfer functions for different channel codes in accordance with the present invention;

Fig. 8      shows transfer functions for parallel concatenated codes;

Fig. 9      shows different mappings with decision regions in accordance with the present invention;

Fig. 10      shows transfer functions of different mappings;

Fig. 11      shows a precoder architecture in accordance with the present invention;

Fig. 12      shows a precoder arrangement in accordance with the present invention;

Fig. 13      shows transfer functions;

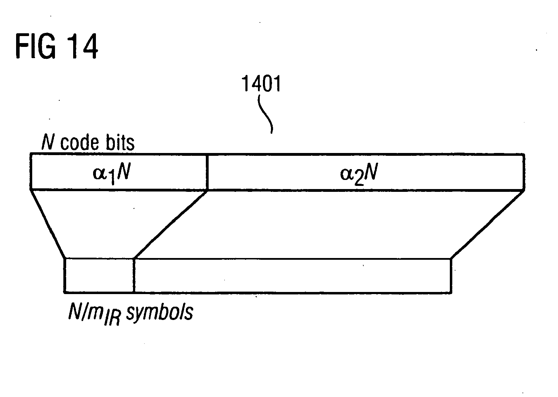

Fig. 14      demonstrates a construction of irregular schemes in accordance with the present invention;

Fig. 15      shows transfer functions in accordance with the present invention;

Fig. 16      shows transfer functions in accordance with the present invention;

Fig. 17      shows transfer functions in accordance with the present invention;

Fig. 18      shows transfer functions in accordance with the present invention;

Fig. 19      shows transfer functions in accordance with the present invention;

Fig. 20      shows transfer functions in accordance with the present invention; and

Fig. 21      shows modulation encoding schemes for EDGE.

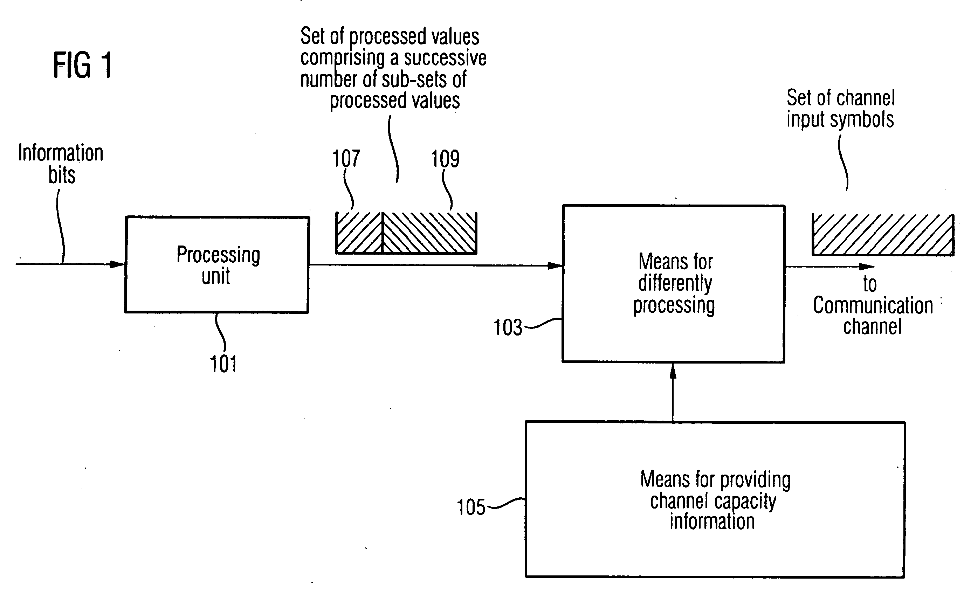

Fig. 1 shows a block diagram of the inventive apparatus for providing a set of channel input symbols in accordance with the first embodiment of the present invention.

The apparatus comprises a processing unit 101 having an input and an output which is coupled to means 103 for differently processing. The means 103 for differently processing has an output for providing a set of channel input symbols and a further input, to which means 105 for providing channel capacity information is coupled.

The processing unit 101 is operative for encoding a plurality of information bits to provide a set of processed values via the output. The set of processed values may be a block of coded bits resulting from encoding the information bits using for example a convolutional encoder having a coding rate of for example 0.5. Additionally, the processing unit may comprise an interleaver for interleaving the coded bits in order to provide a block of interleaved bits as the set of processed values. As is depicted in Fig. 1, the set of processed values comprises a number of successive sub-sets of processed values, wherein the number of successive sub-sets of processed values results in the set of processed values. For the sake of simplicity, Fig. 1 shows the case, where the set of processed values is divided into two subsequent sub-sets of processed values, namely a first sub-set 107 of processed values and a second sub-set 109 of processed values. It is to be emphasized at this point, that the set of processed values corresponds to one block of coded values provided by the encoder comprised by the processing unit 101. Therefore, the set of processed values is associated with the same coding rate of the encoder.

In order to achieve the fine adaptation of the information throughput, the means 103 for differently processing is operative for differently processing the number of successive sub-sets of processed values, to provide the set of channel input symbols having a desired average number of information bits per channel input symbol. To do so, the means 103 for differently processing is operative to apply different processing schemes to each sub-set of processed values, e.g., to the first sub-set 107 of processed values and to the second sub-set 109 of processed values. In order to achieve an optimum adaptation performance, the means 103 for differently processing uses channel capacity information provided by the means 105 for providing channel capacity information in order to apply the different processing schemes to each sub-set of processed values, so that the average number of information bits per channel input symbol in the set of channel input symbols is closer to an achievable number of information bits per channel input symbol, wherein the achievable number is limited by the channel capacity being described by the Shannon-theorem, than a number of information bits per channel input symbol without differently processing the number of successive sub-sets of processed values, e.g. when the same processing scheme is applied to all processed values in the set of processed values. Since the means 103 for differently processing is operative for applying different processing schemes to different successive sub-sets of processed values depending on the channel capacity information, an optimum adaptation or adjustment of the data rate to the current channel conditions can be achieved. This advantage is achieved on the basis of channel capacity information only, without the necessity of a full knowledge of the communication channel (e.g. channel coefficients).

For example, the means 105 for providing channel capacity information may be operative for providing a signal-to-noise ratio (SNR), information on a noise power in the communication channel, information on fading characteristics of the (wireless) communication channel etc.

In accordance with a further aspect of the present invention, the means 105 for providing channel capacity information may receive same from a remote communication receiver being operative for estimating the above-mentioned parameter and transmitting same back to the transmitter housing the inventive apparatus via for example an additional communication channel.

In order to differently process the successive sub-sets of processed values, the means 103 for differently processing may comprise means for differently mapping the successive sub-sets of processed values onto different signal space constellations in order to obtain the set of channel input symbols having the average number of information bits per channel input symbol. The means for differently mapping may be for example operative to map the first sub-set of processed values onto a plurality of complex signal space constellation points associated with a mapping scheme, e.g. 32-QAM, to obtain a first plurality of channel input symbols for the set of channel input symbols. Accordingly, the means for differently mapping is operative for mapping the second sub-set of processed values onto a further plurality of signal space constellation points using a further mapping scheme, for example QPSK, to obtain a second plurality of channel input symbols, wherein the first and the second plurality of the channel input symbols constitute the set of channel input symbols.

Differently modulating preferably consists of the use of different signal constellations (64QAM, 16QAM, 8-PSK, QPSK), to adapt the throughput. Differently mapping preferably consists of the use of different mapping schemes, i.e., bit leveling schemes (e.g. Gray, Partitioning) given a specific signal constellation. With differently mapping, it is possible to adjust the error rate and the complexity in terms of required number of decoding iterations at the receiver. The modulation to carrier (high) frequency is not considered here.

Generally speaking, the means for differently mapping is operative for differently (or individually) mapping the successive sub-sets of processed values onto different signal space constellations, which are defined by different mapping schemes, using a different mapping scheme for each sub-set of processed values to obtain the set of channel input symbols. For example, the means for differently mapping is operative to map m successive processed values of a sub-set of processed values, for example of the first sub-set of processed values, onto a $2^m$-ary signal space constellation. For example, the means for differently mapping uses Gray or Set Partitioning mapping with a QAM or a PSK signal constellation of different size just to name a few possibilities. It is, however, to be noted that the present invention is useful for arbitrary signal constellations and mappings. In this regard, Gray and Set Partitioning can be seen as a mapping possibility, while QAM and PSK can be seen as a signal constellation or modulation scheme.

Moreover, the means for differently mapping may be operative to perform, for a sub-set, a coded mapping combining coding associated with a coding scheme and mapping.

The means 103 for differently processing may comprise means for differently modulating the successive sub-sets of processed values to provide the set of channel input symbols.

The means 103 for differently processing may further comprise means for differently precoding the successive sub-sets of processed values to obtain successive processed sub-sets of values to be mapped to obtain the set of channel input symbols. For example, the means for differently precoding may be operative for precoding the successive sub-set of processed values using different precoding schemes having a code rate equal to 1 to provide successive precoded sub-sets of values as the successive sub-sets of processed values. In other words, the means for differently precoding (precoder) introduces an additional complexity which can be exploited at the receiver for obtaining better estimates of the channel information bits without introducing any additional redundancy. For example, the different precoding schemes are recursive for each sub-set of processed values, so that, at the receiver, an iterative de-precoding scheme, possibly in a combination with a further decoding scheme, can be applied.

The means for differently modulating (modulator) the successive sub-sets of processed values is, in accordance with the present invention, operative for modulating successive sub-sets of processed values onto different signal space constellations using a different modulation scheme or signal constellation for each sub-set of processed values to obtain the channel input symbols. For example, the means for differently modulating is operative to map m successive values of a sub-set of processed values, for example of the first sub-set of processed values, onto a $2^m$-ary signal space constellation to provide the set of channel input symbols. For example, the means for differently mapping uses Gray or Set Partitioning mapping with a QAM or a PSK signal constellation of different size just to name a few possibilities. Moreover, the inventive means for differently modulating may be operative to perform, for each sub-set, a coded modulation combining an encoding and a modulation.

In accordance with the present invention, the means 103 for differently processing may only comprise the means for differently mapping (mapper) or the means for differently modulating (modulator). Moreover, the means for differently processing may comprise a combination consisting of a concatenation of the means for differently mapping and the means for differently precoding or a concatenation consisting of the means for differently modulating and the means for differently precoding. In accordance with the present invention, the channel capacity information is provided to the means for differently processing, so that the means for differently mapping or the means for differently modulating and/or the means for differently precoding may receive the channel capacity information in order to perform the required different processing steps.

In accordance with the present invention, the processing unit 101 comprises an encoder having a code rate smaller than or equal to 1 for encoding the plurality of information bits provided via the input in order to provide coded bits as the set of processed values. Optionally, the processing unit may comprise an interleaver for interleaving the coded bits to provide interleaved values as the set of processed values. Moreover, the processing unit 101 may further comprise a mapper for mapping the coded bits (coded values) or the interleaved values onto a signal space constellation common for all values in order to provide signal space constellation points (values) as the processed values. In other words, the mapper is operative to apply the same mapping scheme, which can be a coded mapping scheme, to the set of coded bits or the interleaved values in order to provide the (complex valued) signal space constellation values as the processed values. For example the mapper comprised by the processing unit 101 is operative to map m successive interleaved values onto a $2^m$-ary signal space constellation points from, for example one of the previously-mentioned signal space constellations. In this case, the subsequent sub-sets of processed values comprise complex signal space constellation points (signal space representatives). In order to achieve the desired average number of information bits in set of channel input symbols, the means 103 for differently processing comprises the means for differently modulating, wherein the means for differently modulating is operative for differently modulating the sub-set of processed values by, for example, reorganizing the signal space constellation points or by applying different modulation schemes or signal constellations by, for example, differently modulating a carrier, in order to provide the set of channel input symbols.

Additionally, the processing unit 101 may further comprise a precoder for precoding the interleaved values or the coded values (coded bits) using a code having a code rate equal to 1 in order to provide the processed values. For example, the precoder is operative for applying one of the precoding schemes mentioned above and has a structure equal to the structure of the means for differently precoding with the exception that the same precoding scheme is applied to the complete set of coded or interleaved values.

In order to obtain the sub-set of processed values, the apparatus shown in Fig. 1 may further comprise a sequence controller for assigning successive groups of successive processed values to successive sub-sets of processed values. In other words, the sequence controller is operative for providing a timing information indicating a respective number of (current) successive processed values to be assigned to a respective sub-set of processed values. Optionally, the sequence controller may be operative for dividing the set of processed values into successive sub-sets of processed values. The operation of the inventive sequence controller will be explained later in detail.

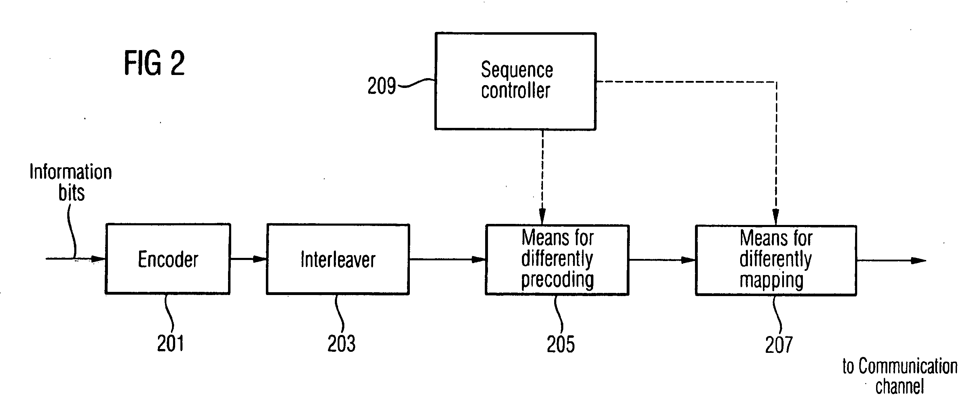

Fig. 2 shows a block diagram of the inventive apparatus for providing a set of channel input symbols is in accordance with a further embodiment of the present invention.

The apparatus of Fig. 2 comprises an encoder 201 having an input for receiving information bits and an output for providing coded bits to an interleaver 203. The interleaver 203 has an output coupled to a means 205 for differently precoding. The means 205 for differently precoding has an output coupled to a means 207 for differently mapping, and a further input, to which a sequence controller 209 is coupled.

The means 207 for differently mapping has an output coupled to a communication channel for providing modulated channel input symbols to be input into the communication channel. The means for differently mapping performs mapping and modulation and preferably includes means for selecting signal constellation and means for selecting mapping (bit labeling).

The encoder 201 may be, for example, operative to encode the information bits using a convolutional encoding scheme, which can be adaptive, with a code rate which is smaller than or equal to 1, so that redundancy is introduced in order to protect the information bits. After interleaving, the set of processed values provided by the interleaver 203 is provided to the means 205 for differently precoding which is operative for differently precoding the successive sub-sets of processed values by exploiting the timing information provided by the sequence controller 209. The differently precoded successive sub-sets of processed values are provided to the means 207 for differently mapping. As mentioned above, the means 207 for differently mapping may optionally be operative for receiving the timing information in order to make sure that a correct decision as to a further processing of a respective sub-set of processed values provided by the means 205 for differently precoding (precoder) is made. The means 207 for differently mapping (mapper) is operative for mapping the successive sub-sets provided by the precoder onto different signal space constellations, as has been explained above. It is to be noted, that the successive sub-sets of processed values are processed sequentially. Hence, the set of channel input symbols provided by the means 207 for differently mapping is a serial, complex valued data stream which is preferably modulated applying the same signal constellation to all channel input symbols provided by the means 207 for differently mapping. Since the means 207 for differently mapping includes selectors for signal constellations and mappings, any mapping scheme can be performed for any subsequent sub-sets of processed values, so that a fine adaptation of the information throughput can be achieved.

The present invention further provides an apparatus for providing a plurality of information bits from a set of channel output symbols resulting from transmitting a set of channel input symbols through a communication channel. The inventive apparatus for providing the plurality of information bits is operative for performing processing steps which are inverse to those performed by the inventive apparatus for providing the set of channel input symbols, which has been explained above.

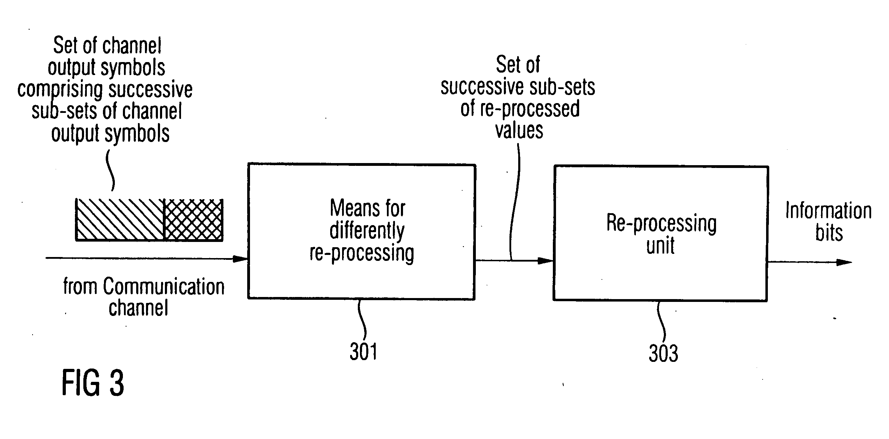

Fig. 3 shows a block diagram of the inventive apparatus for providing the plurality of information bits in accordance with a first embodiment of the present invention.

The apparatus of Fig. 3 comprises means 301 for differently re-processing having an input and an output, wherein the output is coupled to an input of a re-processing unit 303 having an output for providing information bits or an estimate thereof.

The means 301 for differently re-processing is operative for receiving a set of channel output symbols comprising successive sub-sets of channel output symbols, as is depicted in Fig. 3. As mentioned above, the set of channel output symbols is a received version of the set of channel input symbols being transmitted through the communication channel. At a transmitter, the set of channel input symbols comprises a number of successive sub-sets of channel input symbols, wherein the successive sub-sets of channel input symbols are obtained from differently processing successive sub-sets of processed values from a set of processed values, wherein the set of processed values is obtained from encoding a plurality of information bits using, for example, an encoding scheme having a coding rate which is smaller than 1.

In a first step, the means 301 for differently re-processing is operative for differently re-processing the number of successive sub-sets of channel output symbols to obtain successive sub-sets of re-processed values, which are provided via the output of the means 301 for differently re-processing to the re-processing unit 303. The re-processing unit 303 is operative for decoding the set of re-processed values comprising the successive sub-sets of re-processed values to obtain the plurality of information bits or to obtain an estimate thereof.

As mentioned above, the apparatus of Fig. 3 is operative for performing operations which are inverse to those performed at the transmitter. More specifically, the means 301 for differently re-processing may comprise means for differently demodulating (demodulator) the successive sub-sets of channel output symbols to obtain the set of re-processed values comprising the plurality of the successive sets of re-processed values, or means for differently de-mapping the successive sub-sets of channel output symbols using different signal space constellations to obtain the set of re-processed values. In particular, the means for differently demodulating may be operative for differently demodulating the successive sub-set of channel output symbols in accordance with different modulation schemes applied to modulation of the channel input symbols at the transmitter, as has been explained above. Accordingly, the means for differently de-mapping may be operative for applying different de-mapping schemes for subsequent sets of re-processed values which schemes are inverse to the different mapping schemes applied to mapping successive sub-sets of processed values at the transmitter.

For example, the means for differently demodulating is operative for demodulating a sub-set of channel output symbols using Gray or Set Partitioning demapping with a QAM or a PSK signal constellation of different size just to name a few possibilities to provide a sub-set of re-processed values to the re-processing unit 303.

Accordingly, the means for differently de-mapping may be operative for differently de-mapping the number of sub-sets of channel output symbols using different $2^m$-ary de-mapping schemes to obtain the successive sub-sets of re-processed values. The $2^m$-ary de-mapping schemes may be a Gray or Set Partitioning demapping scheme with a QAM or a PSK signal constellation of different size just to name a few possibilities.

In accordance with a further aspect of the present invention, the successive sub-sets of re-processed values may comprise precoded values being obtained by using different precoding schemes at the transmitter. In this case, the means 301 for differently re-processing may further comprise means for differently de-precoding the successive sub-sets of re-processed values using different de-precoding schemes to obtain successive re-precoded sub-sets of re-processed values as the successive sub-sets of re-processed values, wherein all successive sub-sets of re-processed values together result in the set of re-processed values provided to the re-processing unit 303. For example, the means for de-precoding (de-precoder) is a maximum a posteriori or a maximum likelihood de-precoder performing an iterative precoding scheme based on, for example, a trellis diagram.

The re-processing unit 303 may comprise a de-interleaver for de-interleaving the set of re-processed values to obtain de-interleaved values and a decoder for decoding the de-interleaved values to obtain the plurality of information bits or to obtain an estimate thereof.

The decoder may be operative for determining soft output values associated with the interleaved values, the soft output values indicating a reliability of the re-processing schemes, e.g. decoding, de-mapping, de-precoding and demodulation.

For example, the decoder may be operative for providing better estimates of the interleaved values during decoding the interleaved values. This side information can be provided to the means 301 for differently re-processing in order to improve a performance of the means for differently demodulating or the performance of the means for differently de-mapping or a performance of the means for differently de-precoding. For example, the decoder is coupled to the means for differently demodulating or to the means for differently de-mapping for iteratively reducing a demodulation error or a de-mapping error, so that better estimates of channel input symbols can be obtained.

Optionally, the decoder may only provide the soft output values associated with the de-interleaved values to the means for differently demodulating or to the means for differently de-mapping or to the means for differently de-precoding, so that a performance improvement at a current re-processing stages can be obtained. As mentioned above, the performance improvement can iteratively be achieved. For example, the decoder is coupled to the means for differently demodulating or to the means for differently de-mapping via an interleaver, so that the means 301 for differently re-processing receives better estimates of re-processed values. Starting from this information, the means 301 for differently re-processing can compare the re-processed values provided to the re-processing unit 303 with the better estimates of the re-processed values provided by the decoder so that, in a first iteration step, a first performance improvement can be achieved. In a further iteration step, the re-processing unit 303 receives improved estimates of re-processed values and the decoder feeds back, based thereon, better estimates to the means 301 for differently re-processing and so forth.

After a number of iteration steps, for example after 10 iteration steps, the receiving system converges to its stable receiving state.

Accordingly, the means for de-precoding may be operative for differently and iteratively de-precoding the successive sub-sets of processed values, wherein the means for de-precoding is coupled to the decoder for receiving better estimates of re-precoded values in order to perform iteration steps necessary for reducing a de-precoding error. For example, the means for differently de-precoding performs an iteration scheme based on a state diagram having distinct states and distinct transitions between the states, for example a trellis diagram. In this case, the means for de-precoding can be preconditioned by the information provided by the decoder so that, for example, a certain de-precoding state or a certain transition are chosen as initial parameters, or are excluded from further de-precoding steps. Accordingly, the means for differently de-mapping may be operative for focusing on certain de-mapping regions within the respective signal space constellations based on the information provided by the decoder, or to exclude the regions from further processing. Similar iterations can be performed by the means for differently de-mapping and/or by the means for differently de-precoding.

In accordance with a further aspect of the present invention, the inventive apparatus for providing the plurality of information bits comprises a sequence controller for assigning successive groups of channel output symbols to a successive sub-set of channel output symbols. For example, the sequence controller has a structure comparable to the structure of the sequence controller described above. In particular, the sequence controller may be operative for providing a timing information with respect to a time interval for processing a respective sub-set of channel output symbols and a timing information with respect to a time instant at which a re-processing of the respective sub-set should be started.

For example, the sequence controller is operative for receiving a sequence control information from a remote transmitter, the sequence control information indicating the number of sub-sets of channel output symbols and, optionally, a number of channel output symbols associated with a respective sub-set of channel output symbols.

Moreover, the inventive apparatus for providing the plurality of information bits may further comprise a processing controller being operative for providing information on a demodulation scheme associated with a current sub-set of channel output symbols to the means for differently demodulating or for providing information on a de-mapping scheme associated with the current sub-set of channel output symbols to be currently used to the means for differently de-mapping. Moreover, the processing controller may further be operative for providing information on a de-precoding scheme associated with the current sub-set of channel output symbols to the means for differently de-precoding.

In accordance with a further aspect of the present invention, the sequence controller and the processing controller may be implemented in the same control unit. Moreover, the necessary information on demodulation schemes or signal constellations, on de-mapping schemes or on de-precoding schemes can be provided by a remote transmitter, via for example, an additional information channel, to the processing controller and/or to the sequence controller.

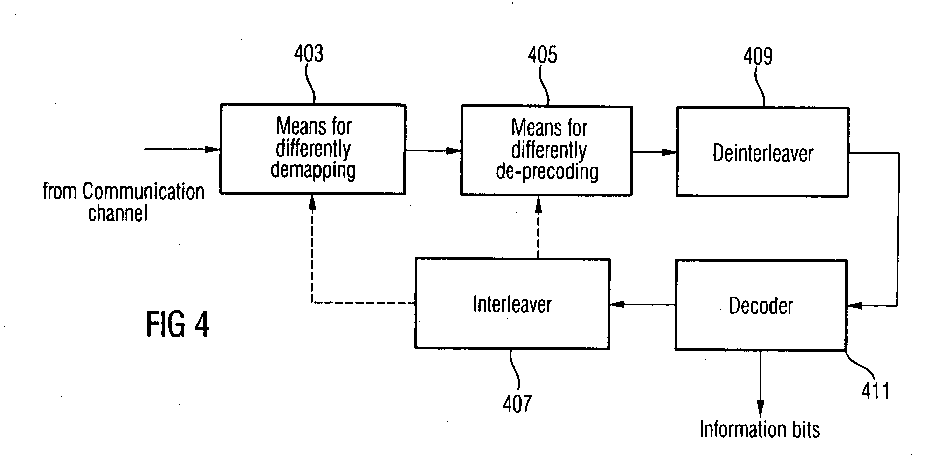

Fig. 4 shows a block diagram of the inventive apparatus for providing a plurality of information bits in accordance with a further embodiment of the present invention. The apparatus comprises means 403 for demodulating signals being transmitted through the communication channel. The means 403 further performs differently de-mapping. The means 403 operative for differently de-mapping has an output coupled to a means 405 for differently de-precoding and a further input, to which an output of an interleaver 407 is coupled. The interleaver 407 is further coupled to a further input of the means 405 for differently de-precoding. An output of the means 405 for differently de-precoding is coupled to a de-interleaver 409 having an output coupled to an input of a decoder 411. The decoder 411 has an output for providing information bits or estimates thereof. Furthermore, the decoder 411 is coupled to an interleaver for providing better estimates of de-mapped values to the means 403 for differently de-mapping in order to perform the iteration steps mentioned above, or to provide better estimates of the de-precoded values to the means 405 for differently de-precoding, so that the performance increasing iteration steps mentioned above can be performed.

In order to describe the inventive concept in more detail, in the following, a data transmission over a wireless channel is considered. Due to the expensive and limited available bandwidth, the development of bandwidth efficient transmission schemes is of ongoing interest. The bandwidth efficient transmission scheme is a Bit-interleaved Coded modulation (BICM), that is, the serial concatenation of an encoder, an interleaver $\Pi$ and a symbol mapper.

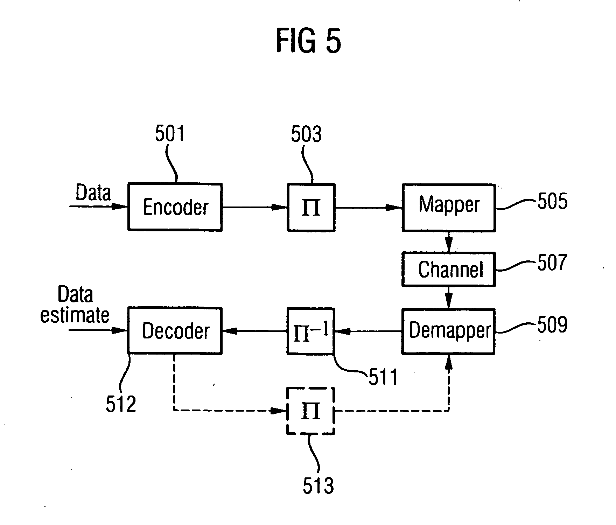

Fig. 5 shows a corresponding system model comprising an encoder 501, an interleaver 503, a mapper 505, a channel 507, a demapper 509, a de-interleaver 511 and a decoder 512 connected in series. Additionally, there is a feedback loop between the decoder 512 via an interleaver 513 to the demapper 509.

The main advantage of the BICM is the maximized diversity order obtained by bit-wise interleaving and simple and flexible implementation possibilities. In order to improve the error rate performance of the BICM, different iterative decoding schemes should be implemented. Both iterative decoding of parallel concatenated codes as well as of serial concatenated codes may be used. The channel code can be e.g. a convolutional code, a Low Density Parity Check (LDPC) code, a parallel concatenated turbo code or a serial concatenated code. Since mapping introduces dependencies between the bits, it can also be used as rate 1 code. Thus, a feedback from the channel decoder to the demapper may be used, with an iterative decoding between the outer channel code and the mapping as an inner code. Together with the mapping, an additional precoder may be used as inner code.

In the following, the problem of adapting a transmission system to the time varying channel in order to maximize the data throughput is considered.

From information theory it is known that the channel quality places fundamental limitations on the number of transmitted information bits per transmission interval. The channel quality is determined by the separation distance between transmitter and receiver (large-scale signal attenuation) and the rapid fluctuations of the signal attenuation over short travel distances or short time durations (small-scale signal attenuation, fading).

Thus, a number of information bits per transmitted symbol should be adapted to the time-varying channel quality. In accordance with the present invention, an adaptation using Adaptive Modulation Encoding (AMC) scheme, i.e. by varying the modulation scheme (e.g. QPSK, 16-QAM) and the channel coding rate is performed.

The channel code rate can be varied in small steps using appropriate puncturing patterns. The problem is how to obtain an exact adaptation to the channel quality using different modulation schemes. A small set of possible modulation schemes allows only a very rough (course) adaptation, as has been explained above. On the other hand, a support of a large set of possible modulation schemes requires a higher complexity at transmitter and receiver. An exact adaptation to the channel quality is not possible since even with a large number of modulation schemes, the performance between the modulation schemes remains quite different. Furthermore, in addition to the throughput, it is of interest to select the error rate or the complexity in terms of required number of iterations of the system, depending on the time varying channel quality. There exists a trade-off between the information data throughput, the complexity and the error rate. This trade-off can be adjusted using a large number of modulation schemes or, if the feedback from the channel decoder to the demapper is used, a large number of mappings and puncturing schemes for the precoder. However, the transmitter and receiver must support all these possibilities, which results in an increased complexity, as has been mentioned above.

The present invention provides a possibility to use different modulation schemes, mappings or precoder architectures within one code block (irregular modulation schemes, irregular mappings and/or irregular precoder) in order to adapt the system to the time varying channel.

For example, if an irregular modulation scheme is used where a part of a block of coded bits is mapped 2QPSK (2 bits per symbol) and the other part to 16-QAM (4 bits per symbol), the ratio can be chosen such that an average of 3 coded bits per symbol (like with e.g. 8-PSK) would be transmitted. A segmentation of the coded bits to different modulation schemes would preferably take place after the interleaver on the transmitter side. Due to the interleaver, the different reliability of the bits mapped to different modulation schemes does not affect the channel decoding process at the receiver. For example, the performance of the combined QPSK and 16-QAM scheme according to the present invention is identical to the performance using 8-PSK.

The inventive idea of the considered example can be extended to irregular mappings and/or irregular precoder to optimize the trade-off throughput versus complexity versus error rate. Different precoder and/or mappings can be used within one code block. Different precoder or mappings can be obtained through different puncturing schemes. Again, if the segmentation is made after the interleaver at the transmitter, the channel decoder does not see any difference if a combination of a precoder and/or mappings is used or if a single precoder and/or mapping with the average characteristic is used.

By the way of example only, in the following a bit interleaved code modulation scheme for bandwidth efficient transmission over fading channels is considered.

Iterative decoding schemes have shown an outstanding performance in many different application areas. For BICM, as an example, three relevant combinations of channel code, precoder and high-order signal constellation mapping out of the possibilities mentioned above will be considered in the following.

1. Parallel concatenated "turbo" code with Gray mapping.

2. Serial concatenated code, channel code as outer code, mapping as inner code.

3. Serial concatenated code, channel code as outer codes, precoder as inner code.

In the first system, as is described in A. Glavieux S. Le Goff and C. Berrou, "Turbo-codes and high spectral efficiency modulation," in IEEE International Conference on Communications (ICC), New Orleans, May 1994, pp. 654-649, iterations between two parallel concatenated codes are carried out at the receiver. In the two other systems as is described in X. Li and J. Ritcey, "Bit-interleaved coded modulation with iterative decoding using soft feedback," Electronic Letters, vol. 34, no. 10, pp. 942-943, May 1998, J. Speidel S. ten Brink and R. Yan, "Iterative demapping and decoding for multilevel modulation," in Proc. IEEE Globecom Conference, Sidney, November 1998, pp. 579-584, S. Dolinar D. Divsalar and F. Pollara, "Serial concatenated modulation with rate-1 inner code," in Proc. IEEE Globecom Conference, San Francisco, November 2000, pp. 777-782, and in M. Tüchler, "Design of serially concatenated systems for long or short block lengths," in IEEE International Conference on Communications (ICC), *respectively,* iterations are performed between the inner code, i.e. the joint decoder (if a precoder is used) and demapper, and the outer channel code at the receiver, similar to iterative decoding a serial concatenated code, as is described in G. Montorsi S. Benedetto, D. Divsalar and F. Pollara, "Serial concatenation of interleaved codes: Performance analysis, design, and iterative decoding", IEEE Transactions on Information Theory, vol. 44, no. 3, pp. 906-926, May 1998.

In accordance with the present invention, the modulation scheme, the mapping and the precoder architecture can be irregular, i.e. different within one code block.

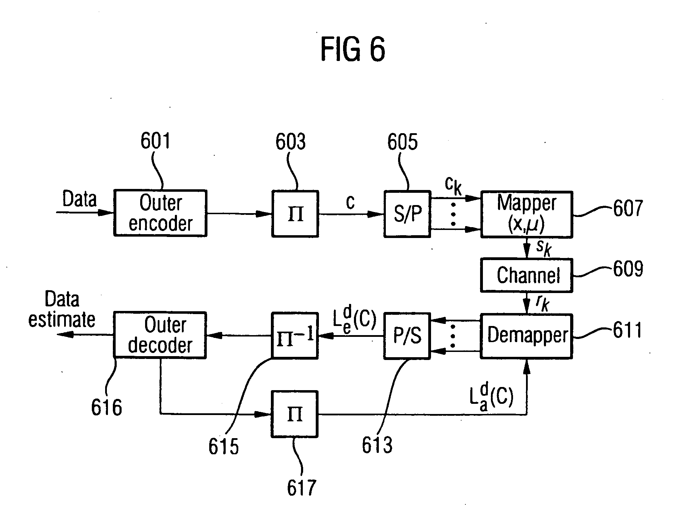

Fig. 6 shows the above considered system model comprising an outer encoder 601 coupled via an interleaver 603 to a serial to parallel converter 605 (S/P). The S/P 605 has a number of outputs coupled to a mapper 607. The mapper 607 is coupled via a channel 609 to a demapper 611 having a number of outputs coupled to a parallel to serial converter 613 (P/S). The P/S 613 is coupled via an interleaver 615 to an outer decoder 616 having an output for providing better estimates. The outer decoder 616 has a further output coupled via the interleaver 617 to a further input of the demapper 611.

A block of data bits is encoded by the outer encoder 601 with rate R and bit interleaved by the random interleaver 603. The coded and interleaved sequence is denoted by c; m consecutive bits of the sequence c are grouped to form the subsequences $c_k=(c_k(1), ..., c_k(m))$. Each subsequence $c_k$ is mapped to a complex symbol $s_k(\mu)$ chosen from the $2^m$-aray signal constellation $\chi$ according to the labeling map $\mu$. Before the mapping, a recursive precoder can be inserted.

The channel 609 is described by $r_k=a_ks_k+n_k$, where $a_k$ denotes the fading coefficient, and $n_k$ is the complex zero-mean Gaussian noise with variance $\sigma_n^2 = N_0 / 2E_s$ in each real dimension. The signal-to-noise ratio is defined as

$$\frac{E_s}{N_0} = \frac{E_b}{N_0} \cdot R \cdot m .$$

At the receiver, the joint de-mapper and decoder (if a precoder is used) processes the received complex symbols $r_k$ and the corresponding a priori log-likelihood ratios (LLRs) $L_a(C_k(i)) = \log\left(\frac{P(c_k(i)=0)}{P(c_k(i)=1)}\right)$ of the coded bits and output the extrinsic LLRs.

$$L_e(C_k(i)) = \log \frac{P(c_k(i) = 0 \mid r_k, L_a(C_k))}{P(c_k(i) = 1 \mid r_k, L_a(C_k))} - L_a(C_k(i)),$$

wherein $C_k(i)$ denotes the binary random variable with realizations $c_k(i) \in \{0,1\}$.

Let $\chi_b^i$ denote the sub-set of symbols $s_k \in \chi$ whose bit levels have the value $b \in \{0, 1\}$ in position $i \in \{1, ...,$ m$\}$, i.e. $\chi_b^i = \{s_k = \mu(c_k), \forall c_k \in \{0,1\}^m \mid c_k(i) = b\}$. Using Bayes' rule and taking the expectation of $p(r_k|s_k)$ over $p(r_k \mid s_k)$ over $P(s_k \mid C_k(i) = b)$, $s_k \in \chi_b^i$ yields

$$L_e(C_k(i)) = \log \frac{\sum_{s_k \in \chi_0^i} p(r_k \mid s_k) \cdot P(s_k \mid C_k(i) = 0)}{\sum_{s_k \in \chi_1^i} p(r_k \mid s_k) \cdot P(s_k \mid C_k(i) = 1)}.$$

The first term $p(r_k|s_k)$ is computed according to the channel model out of the Gaussian distribution:

$$p(r_k \mid s_k) = \frac{1}{\sqrt{2\pi}\sigma_n} e^{-\frac{|r_k - a_k \cdot s_k|^2}{2\sigma_n^2}}.$$

The second term $P(s_k|C_k(i)=b)$ is computed from the a priori information of the individual bit:

$$P(s_k \mid C_k(i) = b) = \prod_{j=1, j \neq i}^{m} \frac{1}{1 + e^{-L_a(C_k(j))}} e^{-L_a(C_k(j)) \cdot c_k(j)}.$$

The extrinsic estimates $L_e(C_k(i))$ are de-interleaved and applied to the APP channel decoder. Performing iterative decoding, extrinsic information about the coded bits from the decoder is fed back and regarded as a priori information $L_a(C_k(i))$ at the demapper. During the initial de-mapping step, the a priori LLR are set to zero.

In the following, convergence prediction using EXIT (Extrinsic Information Transfer) charts will be considered.

The inventive irregular schemes can be easily described based on the average mutual information between the coded bits and the output of the demapper as a function of the a priori input. The iterative exchange of this mutual information between the demapper and the decoder can be visualized in EXIT charts, as is described in S. ten Brink, "Convergence behavior of iteratively decoded parallel concatenated codes," IEEE Transactions on Communications, vol. 49, no. 10, pp. 1727-1737, October 2001.

For the sake of notational simplicity, the bits of the coded sequence c of length N are denoted by $c_n$ and adapt to values C={-1; +1}.

The a priori LLRs of the demapper are assumed to be Gaussian distributed and fairly uncorrelated over many iterations. These assumptions hold for long interleavers. Therefore, the a priori LLRs can be modeled by an independent Gaussian random variable with mean $\mu_L \cdot c_n$ and variance $\sigma_L^2$. This allows to break up the iterative receiver and to analyze the demapper and the decoder separately. Since $\mu_L = \sigma_L^2/2$, the Gaussian distribution of the LLRs can be approximated by a single parameter. Especially, predicting the output LLR distribution of the demapper depending on a given a priori LLR distribution is of interest. Instead of using the variance $\sigma_L^2$ as parameter to characterize the distributions, the mutual information I(L;C) between the coded bits and the LLRs is a more accurate and robust measure.

The LLRs are distributed according to the pdf $p_L(l|C = C)$. The mutual information can be numerically evaluated by the following formula:

$$I(L; C) = \frac{1}{2} \cdot \sum_{c=1,+1} \int_{-\infty}^{+\infty} p_L(i \mid C = c) \cdot \log_2 \frac{2 \cdot p_L(l \mid C = c)}{p_L(l \mid C = -1) + p_L(l \mid C = +1)} dl$$

The pdf $p_L(-l|C = -1)$ and $p_L(l|C = +1)$ have to be determined by Monte Carlo simulation and histogram measurements. If the pdfs are both symmetric, i.e.

$$p_L(l \mid C = +1) = p_L(-l \mid C = -1),$$

and consistent, i.e.

$$p_L(l \mid C = +1) = p_L(-l \mid C = +1) \cdot \exp(l)$$

the mutual information can also be computed using the time average

$$I(L; C) = 1 - \frac{1}{N} \sum_{n=1}^{N} \log_2(1 + e^{-c_n L_n}).$$

For the serial concatenated BICM system, the transfer function of the demapper $T_m(i)$ and of the decoder $T_c$ (i) is a function of the mutual information i shows the relation between the input mutual information and the output mutual information of the demapper and decoder, respectively. The demapper proceeds the information from the channel, where the signal-to-noise ratio $E_s/N_0$ is set to a constant value, and the a priori information from the demapper. The decoder receives only input information from the demapper. Thus, only the demapper transfer function depends on $E_s/N_0$.

It is interesting to note that the area A under the transfer function of the demapper corresponds approximately to $A \approx C(\chi)/m$, where $C(\chi)$ denotes the channel capacity for the signal constellation $\chi$.

For the parallel concatenated turbo code, both constituent codes proceed the input information from the channel, and the a priori information from the other decoder. If the transfer functions of the demapper/decoder and, with flipped axes, of the other decoder are plotted into a single diagram, one can predict the actual staircase trajectory of the mutual information. A crossing between the two functions would cause the iterative process to stop. Examples of EXIT charts are given in the following, where characteristics of main system components in accordance with the present invention will be described.

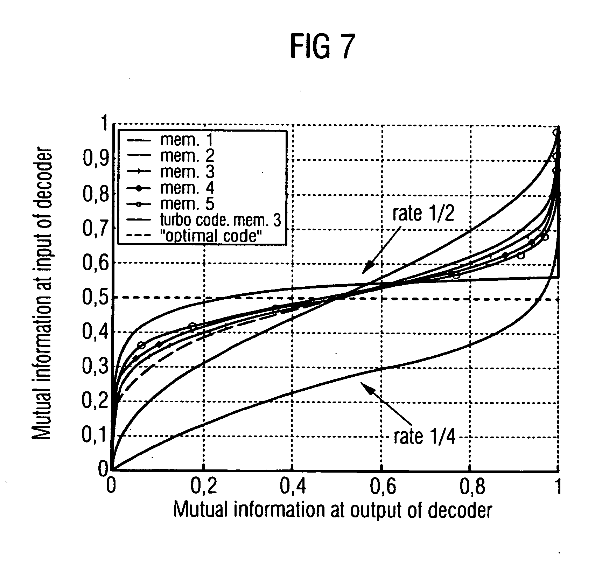

Fig. 7 depicts transfer functions of different channel codes used as outer codes in a serial concatenated system.

The "optimal" code would output ideal extrinsic information once the input mutual information corresponding to the capacity is reached.

Convolutional codes with low memory gather more extrinsic information for input mutual information $I_{in}<0.5$ while for input neutral information $I_{in}>0.5$, codes with high memory output more extrinsic information. It is to be pointed out that different generator polynomials or a change from recursive systematic convolutional codes (RSC) to non-systematic non-recursive codes (NSC) has only little influence on the shape of the code transfer functions. For a given code memory, generator polynomials which maximize the free Hamming distance of the codes will be chosen.

The transfer function of the parallel concatenated turbo code is generated by considering the turbo decoder as a "black box" and by plotting the output mutual information as a function of the channel input mutual information after a certain number of iterations between the two component decoders. Above a certain amount of input information and a couple of iterations, one gets close to ideal output information.

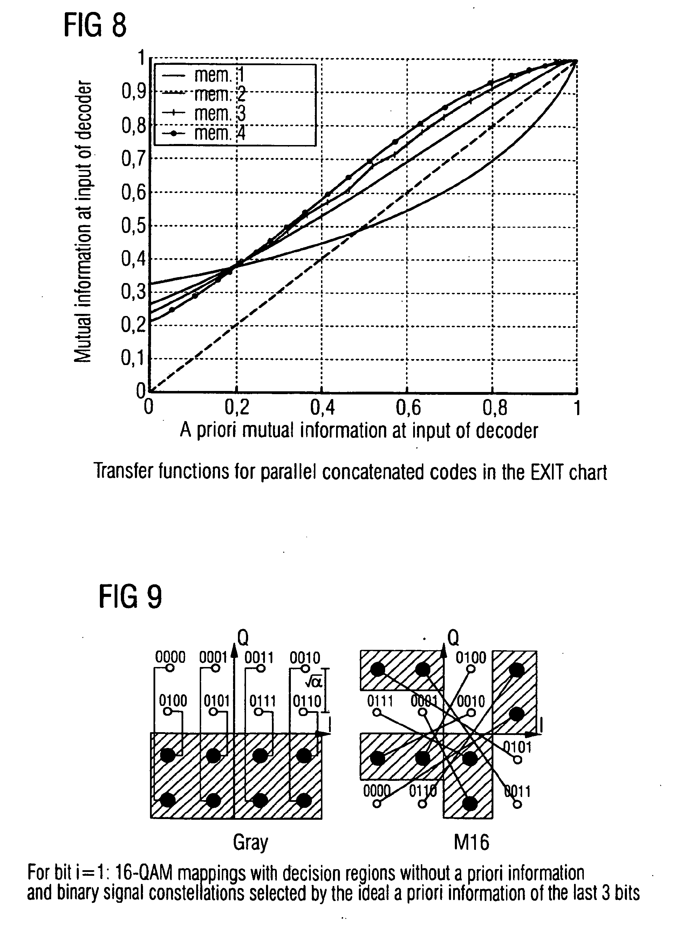

Fig. 8 demonstrates the corresponding transfer functions of one constituent code with different memory inside the turbo decoder (transfer functions for parallel concatenated codes in the EXIT chart).

Referring to the inventive mapping concept, the applied labeling map is a crucial design parameter for the considered BICM systems. By the way of example only, in the following two characteristic 16-QAM mappings will be considered, as shown in Fig. 9. As has been explained above, the decision regions may be determined using the decoder's information on better estimates provided to the means for de-mapping.

First, a case where no a priori information about the coded bits is available at the demapper (e.g. during the initial de-mapping step) will be considered. The shaded regions shown in Fig. 9 correspond to the decision regions for bit i having the value 1 (sub-set $\chi_1^i$ ), the un-shaded regions correspond to the decision regions for bit i = 1 having the value 0 (sub-set $\chi_0^i$ ). If a symbol error occurs within one decision region, no error will be made on the corresponding bit. Large decision regions provide a high protection for the corresponding bit, since the number of nearest neighbors, i.e. the number of symbols $\hat{s}_k \in \chi_b^i$ at minimum Euclidean distance from $s_k \in s_k \in \chi_b^i$ is minimized. In other words, the Hamming distances between symbols in small Euclidean distances should be minimized in order to minimize the number of bit errors for one symbol error. Preferably, Gray mapping, where each symbol has at most one nearest neighbor, is the optimum labeling strategy without a priori knowledge.

The performance with ideal a priori information at the demapper represents the achievable gain over the iterations. In this case, all bits are perfectly known at the demapper, except for the bit to be detected, since only the extrinsic information is used. The a priori known bits select a pair of symbols which differ only in one bit i to be detected. Possible symbol pairs for bit i = 1 are also depicted in Fig. 9. The symbol pairs consist of the sub-sets $\chi_0^i$ and $\chi_1^i$ which are reduced through ideal a priori knowledge from the shaded and un-shaded regions to one symbol, denoted by the filled and unfilled signal points, respectively.

With Gray mapping, the number of distances at minimum Euclidean distances is not reduced through a priori knowledge. Thus, only small performance improvement can be achieved over the iterations. With M16ª, one can observe in Fig. 9 that the Euclidean distances between the decision regions $\chi_1^i$ and $\chi_0^i$, i.e. the remaining symbol pairs are strongly increased.

The EXIT charts described above visualize the impact of the distance properties on the performance of the iterative system. In accordance with the present invention, the EXIT charts can be applied to determining an optimum processing strategy for each subsequent set of processed values or for each subsequent set of channel output symbols.

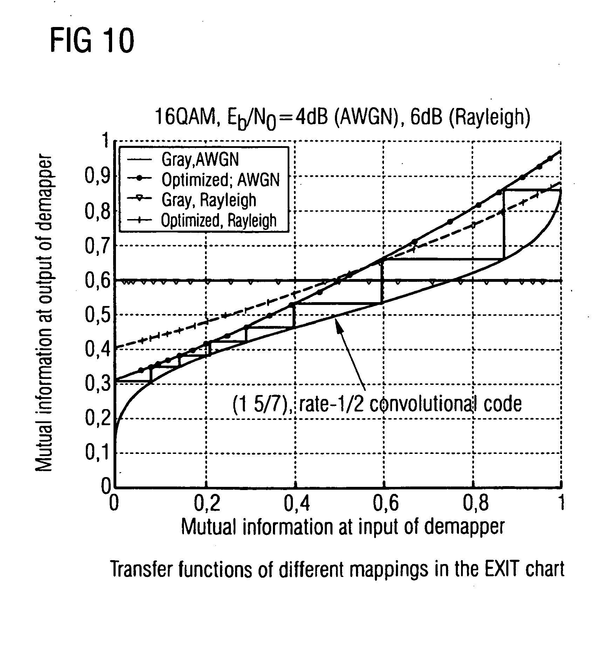

Fig. 10 shows transfer functions of different mappings in the EXIT charts. For an AWGN channel of the 16-QAM Gray and M16ª mapping, together with the transfer function of a 4-state, rate-1/2 convolutional code and a simulated trajectory which passes through the tunnel.

In the following the values of the demapper functions with no a priori knowledge and ideal a priori knowledge will be denoted by $I_0$ and $I_1$ respectively. High values of $I_0$ and $I_1$ are desirable in order to avoid an early crossing of the transfer functions, which would cause the iterative process to stop, and to reach low error rates respectively. Since the capacity is independent of the applied mapping, the area under transfer functions remain the same, resulting in a trade-off between $I_0$ and $I_1$. As is expected, Gray mapping has the highest $I_0$ but no performance improvement is expected with a priori information. With M16ª mapping, the performance with ideal a priori information, i.e. the possible performance improvement over the iteration, is maximized.

All the memoryless mappings described above have in common, that the error probability at high SNR will not decrease with interleaver length. Even with perfect a priori information, the output LLRs of the demapper do not approach infinity and $T_m(1) \neq 1$ in the EXIT chart. This thus suggests to use a recursive precoder before mapping with joint de-mapping/decoding. The recursive structure allows to reach error free performance with an interleaver length going to infinity at the expense of increased complexity.

The precoder (means for precoding) can be described in a general way through the state space equations.

$$s_{k+1} = s_k A + x_k B \quad und \quad y_k = s_k C^T + x_k D$$

where $s_k = (s_k^{(1)}, \ldots , s_k^{(M)})$ describes the precoder memory $x_k = (x_k(1),...,x_k(m))$ the m precoder input bits and $y_k$ the precoder output. A is a MxM matrix, B and C are mxM matrices, and D is a mxm matrix.

Considering a low complexity memory-1 precoder, A = 1 since the precoder must be recursive and B=[1,1, ..., 1] since the precoder state has to be dependent on all input bits. D is a scrambling matrix and can be set to the mxm identity matrix $I_m$. The matrix C is the main design parameter and determines to which outputs the memory output is connected to.

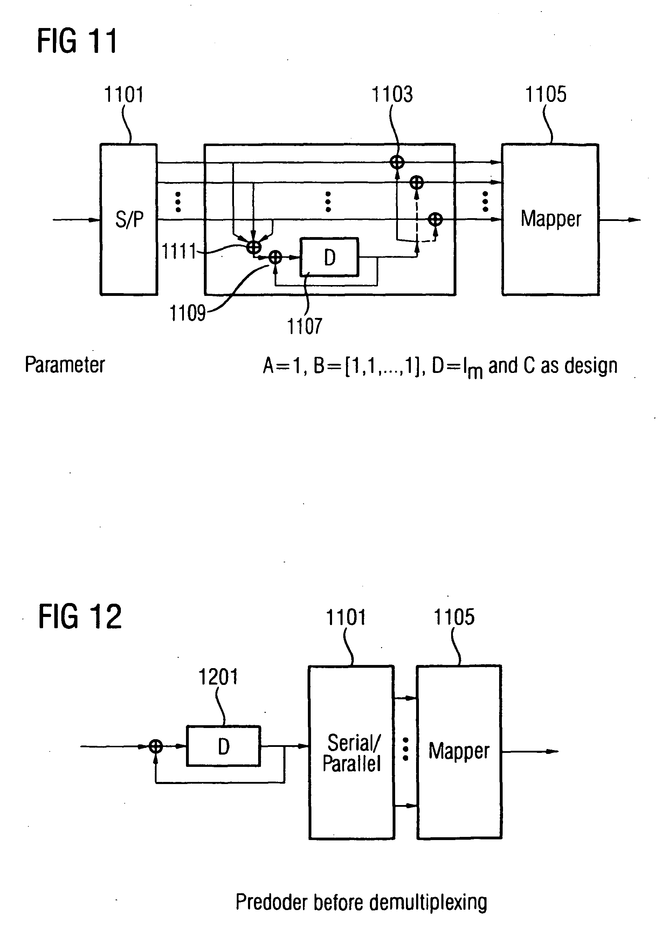

Fig. 11 shows the resulting precoder architecture. The precoder comprises a serial to parallel converter 1101 having a plurality of outputs and an input. Each of the plurality of outputs is coupled via an optional adder 1103 to an associated input of a mapper 1105, the mapper 1105 further having an output.

Additionally, the precoder of Fig. 11 comprises a scrambling block 1107 having an input and an output, wherein the output is coupled to the further inputs of the adders 1103. Furthermore, the output of the scrambling block 1107 is fed back via an adder 1109 to an input of the scrambling block 1007. The adder 1109 has a further input, to which a sum of total output signals provided by the serial to parallel converter 1101 is provided, wherein the addition is performed by an adder 1111.

In order to switch between different precoding schemes, a switch can easily be implemented by puncturing.

Fig. 12 shows a further embodiment of a precoder architecture comprising a precoder 1201 placed before demultiplexing performed by the serial to parallel converter 1101.

However, due to a parallel processing, the architecture of Fig. 11 offers more possibilities in order to optimize the system and if the following is set

$$A = 1; B = C = [1,1,\ldots,1]; D = \begin{bmatrix} 1 & 0 & 0 \\ \vdots & \ddots & 0 \\ 1 & \cdots & 1 \end{bmatrix},$$

Then the systems shown in Fig. 11 and 12 are equivalent.

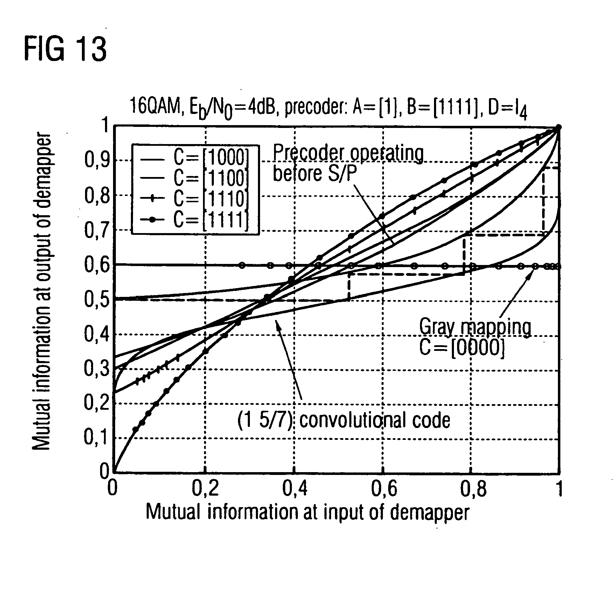

Fig. 13 shows transfer functions with different memory-1 precoder for 16-QAM demapper with Gray mapping in combination with different precoders described by the associated C matrices and with a precoder placed before multiplexing as described above. Preferably, a precoder maximizing the mutual information $T_m(0)$ without a priori information has a C matrix equal to [1, 0, ..., 0]. In contrast to memoryless mappings, there is no trade-off between good performance without and with ideal a priori information since all considered precoders reach $I_1=1$. The area $A \approx C(\chi)/m$ under the transfer functions remains the same.

Instead of changing the structure of the precoder, one can choose a fixed precoder and vary the mapping. However, this approach limits the design possibilities since the performance without a priori information will be lower for any mapping different from a Gray mapping.

In accordance with the present invention, instead of using the same signal constellation, mapping or precoder over one code block of length N is used. The code block is divided in L sub-blocks of length $\alpha_k N$. Each sub-block can be mapped to different signal constellations with $m_k$ coded bits per symbol using various mappings or precoders.

Fig. 10 shows a construction of irregular schemes. A block of values 1401 comprises, by the way of example only, two sub-sets, each sub-set comprising a different number of code bits (coded or interleaved values), wherein $m_{IR}$ denotes the average number of bits (coded bits or interleaved bits) per symbol (channel input symbol). In accordance with the present invention, the ratios $\alpha_k$ satisfy the conditions

$$\sum_{k=1}^{L} \alpha_k = 1, \quad \frac{1}{\sum_{k=1}^{L} \alpha_k / m_k} = m_{IR}, \text{ und } \alpha_k \in [0,1], \forall k .$$

The second condition follows from a computation of the symbol block length

$$N / m_{IR} = \sum_{k=1}^{L} \frac{N \cdot a_k}{m_k} .$$

The ratios $\alpha_k$ can be determined by the above-mentioned sequence controller performing timing control. More specifically, the sequence controller may be operative to assign $\alpha_k N$ successive processed values to a k-th sub-set of the number of sub-sets, wherein the sequence controller is operative to choose or to determine $\alpha_k$ such that the above condition is satisfied.

At a receiver, each sub-block (sub-set) is separately mapped and, if a precoder is used, decoded. Let denote the pdf of the resulting L-values for the $k^{th}$ sub-block by $p_k$.

The distribution $p_{IR}$ of the joint L-values is the mean over the distributions $p_k$ of the sub-blocks

$$p_{IR} = \sum_{k=1}^{L} \alpha_k p_k .$$

Moreover, if the L-values are both symmetric and consistent, it follows from the above equation that the transfer function $T_{IR}$ of the joint demapper/decoder is given by

$$T_m^{IR}(i) = \sum_{k=1}^{L} \alpha_k T_m^k(i) ,$$

where $T_m^k(i)$ is the transfer function of the demapper/decoder for sub-block k. Thus, the transfer function $T_m^{IR}(i)$ is generated out of the linear combination of the transfer functions $T_m^k(i)$.

In the following, further embodiments on how to use the inventive irregular modulation schemes, mappings and precoder for the three BICM systems mentioned above with iterative decoding will be described. For the sake of descriptional simplicity, the code rate is fixed and set to R=1/2 for all systems.

With a parallel concatenated "Turbo" code, only Gray mapping without a precoder is considered, by the way of example only. Thus, only the modulation scheme will be irregular. Through an irregular modulation scheme, either the data throughput or the trade-off between throughput and complexity in terms of required number of iterations can be optimized.

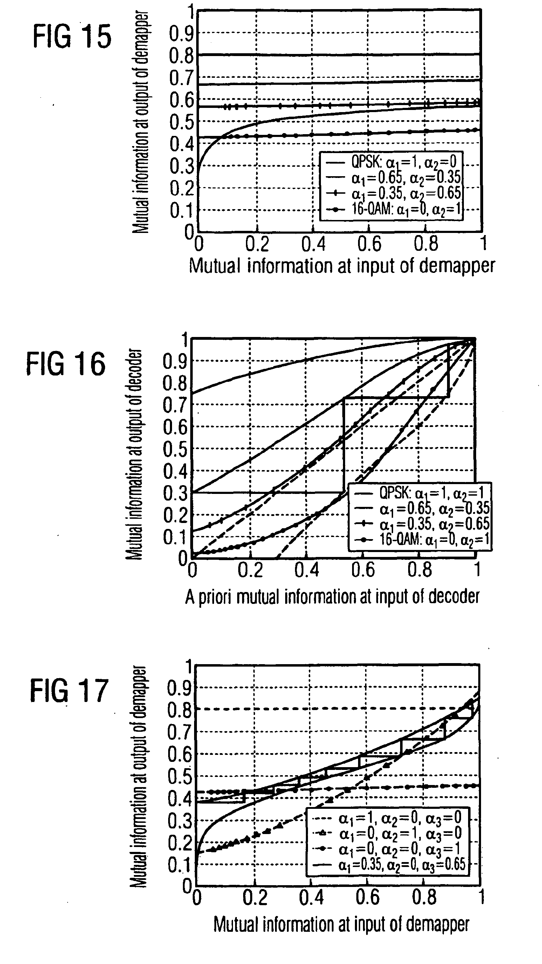

Fig. 15 depicts the EXIT chart for the UMTS turbo code together with QPSK and 16-QAM Gray mapping at $E_s/N_0 = 4dB$. With 16-QAM, the early crossing of the transfer characteristics of the demapper and the decoder results in a high error rate. With QPSK, the maximum possible data throughput cannot be fully exploited.

Using an inventive irregular modulation scheme, a demapper transfer function which lies between the function of QPSK and 16-QAM can be generated. As has been derived above, the demapper transfer function of the irregular scheme is a linear combination of the underlying transfer functions. The number of possible transfer functions depends on the number of bits used to characterize the ratio between the underlying modulation schemes.

Fig. 16 shows the corresponding transfer characteristics of the constituent parallel concatenated codes. Again, with 16-QAM, the early intersection of the transfer functions of the two codes results in high error rates while with the QPSK, the maximum possible data throughput is not achieved.

In order to optimize the data throughput, the ratios can preferably be set to $\alpha_1$=0.35 for QPSK and $\alpha_2$=0.65 for 16-QAM, as is shown in Figs. 15 and 16, resulting in an average of $m_{IR}$=2.96 coded bits per symbol. A high number of turbo code iterations is required, but the throughput is optimized.

In order to optimize the system for a given number of 4 turbo code iterations, $\alpha_1$=0.65 for QPSK and $\alpha_2$=0.35 for 16-QAM is set, as is shown in Figs. 15 and 16. The reduced complexity is achieved by a reduction of the throughput: $m_{IR}$=2.42 coded bits per symbol can be transmitted.

Referring to the second system mentioned above, with the mapper as an inner coder, the modulation scheme as well as the mapping can be irregular. This allows more flexibility. As an example, in the following 16-QAM and M16$^a$ and Gray mapping together with QPSK Gray mapping as underlying schemes will be considered. The code is a 4-state convolutional code, $E_s / N_0 = 4dB$. Using only 16-QAM with M16$^a$ or Gray mapping would result in a high error rate due to the early crossing of the transfer functions, as is depicted in Figs. 17, 18 and 19 showing the transfer functions of demapper, irregular modulation and mapping scheme. By adjusting the ratios $\alpha_1$ for QPSK with Gray mapping, $\alpha_2$ for 16-QAM with Gray mapping and $\alpha_3$ for 16-QAM with **M16**$^a$ mapping, different systems for different requirements can be designed. In the following, three combinations will be considered by the way of example.

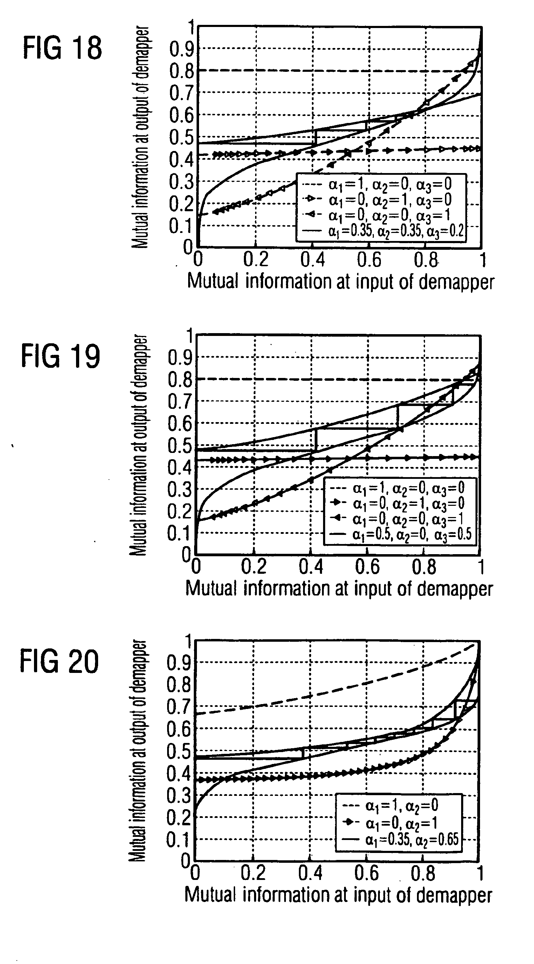

1. High throughput, high complexity, low error rate
This set-up is shown in Fig. 17. The throughput is high ($m_{IR}$=2.96) and a high value of $I_1$ with ideal a priori information is reached in the EXIT chart. Preferably, at least 10 iterations are required.
2. High throughput, low complexity, high error rate.
The number of iterations can be reduced for the same throughput ($m_{IR}$=2.96) if the ratio $\alpha_2$ for 16-QAM with Gray mapping is increased. As is shown in Fig. 18, it can be observed that only 5 iterations are required.
3. Low throughput, low complexity, low error rate.
In Fig. 19, the value of $I_1$ with ideal a priori information in the EXIT chart is similar to that shown in Fig. 17, resulting in a similar error rate. Only 5 iterations are required. However, the throughput may be reduced ($m_{IR}$=2.66), since the ratio $\alpha_1$ of QPSK with Gray mapping is increased.

It is to be noted at this point, that systems with a low number of required iterations also perform better at low $E_s / N_0$ than systems with a high number of required iterations.

In reference to the third system mentioned above, if a recursive precoder is inner code, the error rate can be arbitrarily reduced with a growing interleaver length, as has been described above, if the transfer characteristic of the channel decoder and the joint demapper/decoder do not cross. Using the inventive irregular modulation scheme, the data throughput can be optimized as is performed in the previously discussed systems. As an example, in the following a precoder with C=[1,0,0,0] and 16-QAM and C=[1,0] for QPSK in combination with Gray mapping will be considered. The code is a 16-state convolutional code, $E_s/N_0 = 4dB$. If $\alpha_1$=0.35 for QPSK and $\alpha_2$=0.65 for 16-QAM, a high throughput ($m_{IR}$=2.96) can be observed. At least 10 iterations are required, as is depicted in Fig. 20 showing transfer functions of demapper, irregular modulation and mapping scheme.

Two or more transfer fuctions of a different precoder, depicted in Fig. 13, can be linearly combined in order to obtain an optimal match to the transfer characteristic of the channel decoder.

Depending on certain implementation requirements, the inventive methods can be implemented in hardware or in software. The implementation can be performed using a digital storage medium, in particular a disk or a CD having electronically readable control signals, which can co-operate with a programmable computer system such that the inventive methods are performed. Generally, the present invention is, therefore, a computer product with a program code stored on a machine-readable carrier, the program code being operative for performing the inventive methods when the computer program product runs on a computer. In other words, the inventive methods are, therefore, a computer product having a program code for performing the inventive methods when the computer program runs on a computer.

**Claims**

1. Apparatus for providing a set of channel input symbols, the apparatus comprising:

   a processing unit (101) for encoding a plurality of information bits, the processing unit (101) being operative for providing a code block of length N;
   means (105) for providing channel capacity information indicating an achievable number of information bits per channel input symbol;
   a sequence controller (209) for, using the capacity information, dividing the code block into L successive sub-blocks k, with k ∈ 1...L, of length $\alpha_k N = m_k$ such that each sub-block k covers a ratio $\alpha_k \in [0,1]$ of the code block

   $$\text{and that} \quad \sum_{k=1}^{L} \alpha_k = 1, \quad \text{and} \quad \frac{1}{\sum_{k=1}^{L} \alpha_k / m_k} = m_{IR};$$

   means (103, 207) for differently processing the successive sub-blocks, the means for differently professing being configured to modulate bits of the successive sub-blocks onto a respective $2^m$-ary signal space constellation among a set of $2^m$-ary signal space constellations differing in m, to provide the set of channel input symbols by using a first $2^m$-ary signal space constellation for a first one of the successive sub-blocks, and a second $2^m$-ary signal space constellation with different m for a second pair of the successive sub-blocks so that the average number $m_{IR}$ of information bits per channel input symbol is closer to the achievable number of information bits per channel input symbol than a number of information bits per channel input symbol resulting when applying the same $2^m$-ary signal space constellation to the number of successive sub-blocks;
   **characterized in that** the means (103) for differently processing is configured to differently map bits of the second pair of the successive sub-blocks onto the respective $2^m$-ary signal space constellation using a different mapping scheme for each of the second ones of the successive sub-blocks to adjust an error rate and a complexity in terms of required number of decoding iterations at the receiver side to obtain the set of channel input symbols.

2. Apparatus in accordance with claim 1, wherein the means (207) for differently processing is operative for using a Gray code, a QAM scheme, a PSK scheme or a QPSK scheme.

3. Apparatus in accordance with claim 1 or 2, wherein the means for differently processing is operative to use a QAM or a PSK or a QPSK modulation scheme.

4. Apparatus in accordance with any of the preceding claims, wherein the processing unit (101) comprises an encoder (201) having a code rate being smaller than 1 for encoding the plurality of information bits to provide coded bits, and an interleaver (203) for interleaving the coded bits to provide interleaved bits forming the code block.

5. Apparatus for providing a plurality of information bits from a set of channel output symbols resulting from transmitting a set of channel input symbols through a communication channel, wherein the set of channel input symbols comprises a number L of successive sub-sets of channel input symbols, the number L of successive sub-sets of channel input symbols being obtained from differently processing L successive sub-blocks k, with k $\in$ 1...L, of length $\alpha_k N = m_k$ from a code block of length N, with $\alpha_k \in [0,1]$ $\sum_{k=1}^{L} \alpha_k = 1$, and $\frac{1}{\sum_{k=1}^{L} \alpha_k / m_k} = m_{IR}$, in that bits of the successive sub-blocks are modulated onto a respective $2^m$-ary signal space constellation among a set of $2^m$-ary signal space constellations differing in m, using a first $2^m$-ary signal space constellation for a first one of the successive sub-blocks, and a second $2^m$-ary signal space constellation with different m for a second pair of the successive sub-blocks, the code block being obtained from encoding the plurality of information bits, wherein the bits of the second pair of the successive sub-blocks are mapped onto the respective $2^m$-ary signal space constellation using a different mapping scheme for each of the second ones of the successive sub-blocks, the apparatus comprising:

a sequence controller configured for receiving sequence control information from a remote transmitter, the sequence control information indicating the number L of sub-sets of channel output symbols and for assigning L successive groups of channel output symbols to L successive sub-sets of channel output symbols;
means (301, 403) for differently re-processing the number L of successive sub-sets of channel output symbols by differently demodulating the successive sub-sets of channel output symbols using the respective $2^m$-ary signal space constellation for each sub-set to obtain L successive re-processed sub-blocks k ; and
a re-processing unit (303, 411) for decoding the successive re-processed sub-blocks to obtain the plurality of information bits,
**characterized in that** the means (301) for differently re-processing is configured to differently demap the successive sub-sets of channel output symbols from the respective signal space constellation using the different demapping schemes for the second pair of the successive sub-blocks to obtain the re-processed sub-blocks.

6. Apparatus in accordance with claim 5, wherein the means (301) for differently re-processing is operative for demodulating a sub-set of channel output symbols using a QAM demodulation scheme, a QPSK demodulation scheme, or a PSK demodulation scheme to provide a re-processed sub-block of the set of successive re-processed sub-blocks.

7. Apparatus in accordance with claim 5 or 6, wherein the demapping schemes belong to a Gray decoding scheme, to a QAM demapping scheme, to a QPSK demapping scheme or to a PSK demapping scheme.

8. Apparatus in accordance with any of claims 5 to 7, further comprising means for de-precoding using a maximum aposteriori or a maximum likelihood criterion for de-precoding.

9. Apparatus in accordance with any of claims 5 to 8, wherein the re-processing unit (303) comprises a de-interleaver for de-interleaving the set of re-processed blocks to obtain the interleaved values, and a decoder for decoding the de-interleaved values to obtain the plurality of information bits.

10. Apparatus in accordance with claim 9, wherein the decoder is operative to determine soft output values associated with the de-interleaved values.

11. Apparatus according to claim 10, wherein the decoder is coupled to the means for differently de-precoding or to the means for differently demapping for iteratively reducing a demodulation error or a demapping error.

12. Apparatus in accordance with any of claims 5 to 11, wherein the means (405) for differently de-precoding is operative for iteratively de-precoding the successive sub-blocks, wherein the re-processing unit (303) comprises a de-interleaver for providing de-interleaved values, and a decoder for decoding the de-interleaved values, wherein the decoder is operative to determine soft output values associated with the de-interleaved values, and wherein the decoder is coupled to the means (405) for differently de-precoding for iteratively reducing a de-precoding error.

13. Apparatus in accordance with any of claims 5 to 12, further comprising a processing controller being operative for providing information on a demodulation scheme associated with a current sub-set of channel output symbols to the means for differently demodulating and for providing information on a demapping scheme associated with the current sub-set of channel output symbols to the means for differently de-mapping.

**14.** Method for providing a set of channel input symbols, the method comprising the following steps of:

encoding a plurality of information bits to provide a code block of length N;
using the capacity information, dividing the code block into L successive sub-blocks k, with k ∈ 1...L, of length $\alpha_k N = m_k$ such that each sub-block k covers a ratio $\alpha_k \in [0,1]$ of the code block and that $\sum_{k=1}^{L} \alpha_k = 1$,

and $\dfrac{1}{\sum_{k=1}^{L} \alpha_k / m_k} = m_{IR}$,

differently processing the successive sub-blocks by modulating bits of the successive sub-blocks onto a respective $2^m$-ary signal space constellation among a set of $2^m$-ary signal space constellations differing in m, to provide the set of channel input symbols by using a first $2^m$-ary signal space constellation for a first one of the successive sub-blocks, and a second $2^m$-ary signal space constellation with different m for a second pair of the successive sub-blocks so that the average number $m_{IR}$ of information bits per channel input symbol is closer to the achievable number of information bits per channel input symbol than a number of information bits per channel input symbol resulting when applying the same $2^m$-ary signal space constellation to the number of successive sub-blocks;
providing channel capacity information indicating an achievable number of information bits per channel input symbol;
**characterized in that** the step of differently processing further comprises differently mapping bits of the second pair of the successive sub-blocks onto the respective $2^m$-ary signal space constellation using a different mapping scheme for each of the second ones of the successive sub-blocks given a specific signal constellation to adjust an error rate and a complexity in terms of required number of decoding iterations at the receiver side to obtain the set of channel input symbols.

**15.** Method for providing a plurality of information bits from a set of channel output symbols resulting from transmitting a set of channel input symbols through a communication channel, wherein the set of channel input symbols comprises a number L of successive sub-sets of channel input symbols, the number L of successive sub-sets of channel input symbols being obtained from differently processing L successive sub-blocks k, with k ∈ 1...L, of length $\alpha_k N = m_k$ from a code block of length N, with $\alpha_k \in [0,1]$, $\sum_{k=1}^{L} \alpha_k = 1$, and $\dfrac{1}{\sum_{k=1}^{L} \alpha_k / m_k} = m_{IR}$, in that bits of the successive subblocks are modulated onto a respective $2^m$-ary signal space constellation among a set of $2^m$-ary signal space constellations differing in m, using a first $2^m$-ary signal space constellation for a first one of the successive sub-blocks, and a second $2^m$-ary signal space constellation with different m for a second pair of the successive sub-blocks, the code block being obtained from encoding the plurality of information bits, wherein the bits of the second pair of the successive sub-blocks are mapped onto the respective $2^m$-ary signal space constellation using a different mapping scheme for each of the second ones of the successive sub-blocks, the method comprising the following steps of:

receiving sequence control information from a remote transmitter, the sequence control information indicating the number L of sub-sets of channel output symbols;
assigning L successive groups of channel output symbols to L successive sub-sets of channel output symbols;
differently re-processing the number L of successive sub-sets of channel output symbols by differently demodulating the successive sub-sets of channel output symbols using the respective $2^m$-ary signal space constellation for each sub-set to obtain L successive re-processed sub-blocks k; and
decoding the successive re-processed sub-blocks to obtain the plurality of information bits,
**characterized in that** the step of differently reprocessing further comprises differently demapping the successive sub-sets of channel output symbols from the respective signal space constellation using the different demapping schemes for the second pair of the successive sub-blocks to obtain the re-processed sub-blocks.

**16.** Computer program having a program code for performing the method in accordance with claim 14 or the method in accordance with claim 15, when the program runs on a computer.

**EP 1 876 745 B1**

**Patentansprüche**

1. Vorrichtung zum Bereitstellen eines Satzes von Kanaleingangssymbolen, wobei die Vorrichtung folgende Merkmale aufweist:

eine Verarbeitungseinheit (101) zum Codieren einer Mehrzahl von Informationsbits, wobei die Verarbeitungseinheit (101) zum Bereitstellen eines Codeblocks mit einer Länge N wirksam ist;
eine Einrichtung (105) zum Bereitstellen von Kanalkapazitätsinformationen, die eine erzielbare Anzahl von Informationsbits pro Kanaleingangssymbol anzeigen;
eine Sequenzsteuerung (209) zum Unterteilen des Codeblocks, unter Verwendung der Kapazitätsinformationen, in L aufeinanderfolgende Teilblöcke k, wobei $k \in 1...L$, mit einer Länge $\alpha_k N = m_k$, derart, dass jeder Teilblock k

ein Verhältnis $\alpha_k \in [0,1]$ des Codeblocks abdeckt, und dass $\sum_{k=1}^{L} \alpha_k = 1$ und $\dfrac{1}{\sum_{k=1}^{L} \alpha_k / m_k} = m_{IR}$ gilt;

eine Einrichtung (103, 207) zum unterschiedlichen Verarbeiten der aufeinanderfolgenden Teilblöcke, wobei die Einrichtung zum unterschiedlichen Verarbeiten konfiguriert ist, um Bits der aufeinanderfolgenden Teilblöcke auf eine jeweilige $2^m$-äre Signalraumkonstellation unter einem Satz $2^m$-ärer Signalraumkonstellationen, die sich hinsichtlich m unterscheiden, zu modulieren, um den Satz von Kanaleingangssymbolen bereitzustellen, durch Verwenden einer ersten $2^m$-ären Signalraumkonstellation für einen ersten der aufeinanderfolgenden Teilblöcke und einer zweiten $2^m$-ären Signalraumkonstellation mit unterschiedlichem m für ein zweites Paar der aufeinanderfolgenden Teilblöcke, so dass die durchschnittliche Anzahl $m_{IR}$ von Informationsbits pro Kanaleingangssymbol näher an der erzielbaren Anzahl von Informationsbits pro Kanaleingangssymbol ist als eine Anzahl von Informationsbits pro Kanaleingangssymbol, die resultiert, wenn die gleiche $2^m$-äre Signalraumkonstellation auf die Anzahl aufeinanderfolgender Teilblöcke angewendet wird;
**dadurch gekennzeichnet, dass** die Einrichtung (103) zum unterschiedlichen Verarbeiten konfiguriert ist, um Bits des zweiten Paares der aufeinanderfolgenden Teilblöcke unter Verwendung eines unterschiedlichen Abbildungsschemas für jeden der zweiten der aufeinanderfolgenden Teilblöcke unterschiedlich auf die jeweilige $2^m$-äre Signalraumkonstellation abzubilden, um eine Fehlerrate und eine Komplexität hinsichtlich einer erforderlichen Anzahl von Decodierungsiterationen an der Empfängerseite einzustellen, um den Satz von Kanaleingangssymbolen zu erhalten.

2. Vorrichtung gemäß Anspruch 1, bei der die Einrichtung (207) zum unterschiedlichen Verarbeiten zum Verwenden eines Gray-Codes, eines QAM-Schemas, eines PSK-Schemas oder eines QPSK-Schemas wirksam ist.

3. Vorrichtung gemäß Anspruch 1 oder 2, bei der die Einrichtung zum unterschiedlichen Verarbeiten wirksam ist, um ein QAM- oder ein PSK- oder ein QPSK-Modulationsschema zu verwenden.

4. Vorrichtung gemäß einem der vorherigen Ansprüche, bei der die Verarbeitungseinheit (101) einen Codierer (201) mit einer Coderate, die kleiner als 1 ist, zum Codieren der Mehrzahl von Informationsbits, um codierte Bits bereitzustellen, und eine Verschachtelungseinrichtung (203) zum Verschachteln der codierten Bits, um verschachtelte Bits, die den Codeblock bilden, bereitzustellen, aufweist.

5. Vorrichtung zum Bereitstellen einer Mehrzahl von Informationsbits aus einem Satz von Kanalausgangssymbolen, die aus einem Übertragen eines Satzes von Kanaleingangssymbolen durch einen Kommunikationskanal resultieren, wobei der Satz von Kanaleingangssymbolen eine Anzahl L aufeinanderfolgender Teilsätze von Kanaleingangssymbolen aufweist, wobei die Anzahl L aufeinanderfolgender Teilsätze von Kanaleingangssymbolen aus einem unterschiedlichen Verarbeiten von L aufeinanderfolgenden Teilblöcken k, wobei $k \in 1...L$, mit einer Länge $\alpha_k N = m_k$ aus

einem Codeblock mit einer Länge N erhalten wird, wobei $\alpha_k \in [0,1]$, $\sum_{k=1}^{L} \alpha_k = 1$ und

$\dfrac{1}{\sum_{k=1}^{L} \alpha_k / m_k} = m_{IR}$ gilt, dahingehend, dass Bits der aufeinanderfolgenden Teilblöcke auf eine jeweilige

$2^m$-äre Signalraumkonstellation unter einem Satz $2^m$-ärer Signalraumkonstellationen, die sich hinsichtlich m unterscheiden, moduliert werden, unter Verwendung einer ersten $2^m$-ären Signalraumkonstellation für einen ersten der aufeinanderfolgenden Teilblöcke und einer zweiten $2^m$-ären Signalraumkonstellation mit unterschiedlichem m für ein zweites Paar der aufeinanderfolgenden Teilblöcke, wobei der Codeblock aus einem Codieren der Mehrzahl von Informationsbits erhalten wird, wobei die Bits des zweiten Paars der aufeinanderfolgenden Teilblöcke auf die jeweilige $2^m$-äre Signalraumkonstellation abgebildet werden, unter Verwendung eines unterschiedlichen Abbildungsschemas für jeden der zweiten der aufeinanderfolgenden Teilblöcke, wobei die Vorrichtung folgende Merkmale aufweist:

eine Sequenzsteuerung, die zum Empfangen von Sequenzsteuerinformationen von einem entfernten Sender, wobei die Sequenzsteuerinformationen die Anzahl L von Teilsätzen von Kanalausgangssymbolen anzeigen, und zum Zuweisen von L aufeinanderfolgenden Gruppen von Kanalausgangssymbolen zu L aufeinanderfolgenden Teilsätzen von Kanalausgangssymbolen konfiguriert ist;
eine Einrichtung (301, 403) zum unterschiedlichen Wiederverarbeiten der Anzahl L aufeinanderfolgender Teilsätze von Kanalausgangssymbolen durch unterschiedliches Demodulieren der aufeinanderfolgenden Teilsätze von Kanalausgangssymbolen unter Verwendung der jeweiligen $2^m$-ären Signalraumkonstellation für jeden Teilsatz, um L aufeinanderfolgende wiederverarbeitete Teilblöcke k zu erhalten; und
eine Wiederverarbeitungseinheit (303, 411) zum Decodieren der aufeinanderfolgenden wiederverarbeiteten Teilblöcke, um die Mehrzahl von Informationsbits zu erhalten,
**dadurch gekennzeichnet, dass** die Einrichtung (301) zum unterschiedlichen Wiederverarbeiten konfiguriert ist, um die aufeinanderfolgenden Teilsätze von Kanalausgangssymbolen aus der jeweiligen Signalraumkonstellation unter Verwendung der unterschiedlichen Rückabbildungsschemata für das zweite Paar der aufeinanderfolgenden Teilblöcke unterschiedlich rückabzubilden, um die wiederverarbeiteten Teilblöcke zu erhalten.

6. Vorrichtung gemäß Anspruch 5, bei der die Einrichtung (301) zum unterschiedlichen Wiederverarbeiten zum Demodulieren eines Teilsatzes von Kanalausgangssymbolen unter Verwendung eines QAM-Demodulationsschemas, eines QPSK-Demodulationsschemas oder eines PSK-Demodulationsschemas wirksam ist, um einen wiederverarbeiteten Teilblock des Satzes aufeinanderfolgender wiederverarbeiteter Teilblöcke bereitzustellen.

7. Vorrichtung gemäß Anspruch 5 oder 6, bei der die Rückabbildungsschemata zu einem Gray-Decodierungsschema, zu einem QAM-Rückabbildungsschema, zu einem QPSK-Rückabbildungsschema oder zu einem PSK-Rückabbildungsschema gehören.

8. Vorrichtung gemäß einem der Ansprüche 5 bis 7, die ferner eine Einrichtung zum Ent-Vorcodieren unter Verwendung eines Maximal-Aposteriori- oder eines Maximal-Wahrscheinlichkeits-Kriteriums zum Ent-Vorcodieren aufweist.

9. Vorrichtung gemäß einem der Ansprüche 5 bis 8, bei der die Wiederverarbeitungseinheit (303) eine Entschachtelungseinrichtung zum Entschachteln des Satzes wiederverarbeiteter Blöcke, um die verschachtelten Werte zu erhalten, und einen Decodierer zum Decodieren der entschachtelten Werte, um die Mehrzahl von Informationsbits zu erhalten, aufweist.

10. Vorrichtung gemäß Anspruch 9, bei der der Decodierer wirksam ist, um weiche Ausgangswerte zu bestimmen, die den entschachtelten Werten zugeordnet sind.

11. Vorrichtung gemäß Anspruch 10, bei der der Decodierer mit der Einrichtung zum unterschiedlichen Ent-Vorcodieren oder mit der Einrichtung zum unterschiedlichen Rückabbilden zum iterativen Reduzieren eines Demodulationsfehlers oder eines Rückabbildungsfehlers gekoppelt ist.

12. Vorrichtung gemäß einem der Ansprüche 5 bis 11, bei der die Einrichtung (405) zum unterschiedlichen Ent-Vorcodieren zum iterativen Ent-Vorcodieren der aufeinanderfolgenden Teilblöcke wirksam ist, wobei die Wiederverarbeitungseinheit (303) eine Entschachtelungseinrichtung zum Bereitstellen entschachtelter Werte und einen Decodierer zum Decodieren der entschachtelten Werte aufweist, wobei der Decodierer wirksam ist, um weiche Ausgangswerte zu bestimmen, die den entschachtelten Werten zugeordnet sind, und wobei der Decodierer mit der Einrichtung (405) zum unterschiedlichen Ent-Vorcodieren zum iterativen Reduzieren eines Ent-Vorcodierungsfehlers gekoppelt ist.

13. Vorrichtung gemäß einem der Ansprüche 5 bis 12, die ferner eine Verarbeitungssteuerung aufweist, die zum Bereitstellen von Informationen über ein Demodulationsschema, das einem momentanen Teilsatz von Kanalausgangssymbolen zugeordnet ist, für die Einrichtung zum unterschiedlichen Demodulieren und zum Bereitstellen von Informationen über ein Rückabbildungsschema, das dem momentanen Teilsatz von Kanalausgangssymbolen zugeordnet ist, für die Einrichtung zum unterschiedlichen Rückabbilden wirksam ist.

14. Verfahren zum Bereitstellen eines Satzes von Kanaleingangssymbolen, wobei das Verfahren die folgenden Schritte aufweist:

Codieren einer Mehrzahl von Informationsbits, um einen Codeblock mit einer Länge N bereitzustellen;
unter Verwendung der Kapazitätsinformationen, Unterteilen des Codeblocks in L aufeinanderfolgende Teilblöcke k, wobei $k \in 1...L$, mit einer Länge $\alpha_k N = m_k$, derart, dass jeder Teilblock k ein Verhältnis $\alpha_k \in [0,1]$ des Codeblocks abdeckt, und dass $\sum_{k=1}^{L} \alpha_k = 1$ und $\frac{1}{\sum_{k=1}^{L} \alpha_k / m_k} = m_{IR}$ gilt,

unterschiedliches Verarbeiten der aufeinanderfolgenden Teilblöcke durch Modulieren von Bits der aufeinanderfolgenden Teilblöcke auf eine jeweilige $2^m$-äre Signalraumkonstellation unter einem Satz $2^m$-ärer Signalraumkonstellationen, die sich hinsichtlich m unterscheiden, um den Satz von Kanaleingangssymbolen bereitzustellen, durch Verwenden einer ersten $2^m$-ären Signalraumkonstellation für einen ersten der aufeinanderfolgenden Teilblöcke und einer zweiten $2^m$-ären Signalraumkonstellation mit unterschiedlichem m für ein zweites Paar der aufeinanderfolgenden Teilblöcke, so dass die durchschnittliche Anzahl $m_{IR}$ von Informationsbits pro Kanaleingangssymbol näher an der erzielbaren Anzahl von Informationsbits pro Kanaleingangssymbol ist als eine Anzahl von Informationsbits pro Kanaleingangssymbol, die resultiert, wenn die gleiche $2^m$-äre Signalraumkonstellation auf die Anzahl aufeinanderfolgender Teilblöcke angewendet wird;
Bereitstellen von Kanalkapazitätsinformationen, die eine erzielbare Anzahl von Informationsbits pro Kanaleingangssymbol anzeigen;
**dadurch gekennzeichnet, dass** der Schritt des unterschiedlichen Verarbeitens ferner ein unterschiedliches Abbilden von Bits des zweiten Paars der aufeinanderfolgenden Teilblöcke auf die jeweilige $2^m$-äre Signalraumkonstellation unter Verwendung eines unterschiedlichen Abbildungsschemas für jeden der zweiten der aufeinanderfolgenden Teilblöcke angesichts einer spezifischen Signalkonstellation aufweist, um eine Fehlerrate und eine Komplexität hinsichtlich einer erforderlichen Anzahl von Decodierungsiterationen an der Empfängerseite einzustellen, um den Satz von Kanaleingangssymbolen zu erhalten.

15. Verfahren zum Bereitstellen einer Mehrzahl von Informationsbits aus einem Satz von Kanalausgangssymbolen, die aus einem Übertragen eines Satzes von Kanaleingangssymbolen durch einen Kommunikationskanal resultieren, wobei der Satz von Kanaleingangssymbolen eine Anzahl L aufeinanderfolgender Teilsätze von Kanaleingangssymbolen aufweist, wobei die Anzahl L aufeinanderfolgender Teilsätze von Kanaleingangssymbolen aus einem unterschiedlichen Verarbeiten L aufeinanderfolgender Teilblöcke k, wobei $k \in 1...L$, mit einer Länge $\alpha_k N = m_k$ aus einem Codeblock mit einer Länge N erhalten wird, wobei $\alpha_k \in [0,1]$, $\sum_{k=1}^{L} \alpha_k = 1$ und $\frac{1}{\sum_{k=1}^{L} \alpha_k / m_k} = m_{IR}$ gilt, dahingehend, dass Bits der aufeinanderfolgenden Teilblöcke auf eine jeweilige $2^m$-äre Signalraumkonstellation unter einem Satz $2^m$-ärer Signalraumkonstellationen, die sich hinsichtlich m unterscheiden, moduliert werden, unter Verwendung einer ersten $2^m$-wären Signalraumkonstellation für einen ersten der aufeinanderfolgenden Teilblöcke und einer zweiten $2^m$-ären Signalraumkonstellation mit unterschiedlichem m für ein zweites Paar der aufeinanderfolgenden Teilblöcke, wobei der Codeblock aus einem Codieren der Mehrzahl von Informationsbits erhalten wird, wobei die Bits des zweiten Paars der aufeinanderfolgenden Teilblöcke auf die jeweilige $2^m$-äre Signalraumkonstellation abgebildet werden, unter Verwendung eines unterschiedlichen Abbildungsschemas für jeden der zweiten der aufeinanderfolgenden Teilblöcke, wobei das Verfahren die folgenden Schritte aufweist:

Empfangen von Sequenzsteuerinformationen von einem entfernten Sender, wobei die Sequenzsteuerinformationen die Anzahl L von Teilsätzen von Kanalausgangssymbolen anzeigen;
Zuweisen L aufeinanderfolgender Gruppen von Kanalausgangssymbolen zu L aufeinanderfolgenden Teilsätzen von Kanalausgangssymbolen;
unterschiedliches Wiederverarbeiten der Anzahl L aufeinanderfolgender Teilsätze von Kanalausgangssymbolen durch unterschiedliches Demodulieren der aufeinanderfolgenden Teilsätze von Kanalausgangssymbolen unter Verwendung der jeweiligen $2^m$-ären Signalraumkonstellation für jeden Teilsatz, um L aufeinanderfolgende wiederverarbeitete Teilblöcke k zu erhalten; und
Decodieren der aufeinanderfolgenden wiederverarbeiteten Teilblöcke, um die Mehrzahl von Informationsbits zu erhalten,
**dadurch gekennzeichnet, dass** der Schritt des unterschiedlichen Wiederverarbeitens ferner ein unterschiedliches Rückabbilden der aufeinanderfolgenden Teilsätze von Kanalausgangssymbolen aus der jeweiligen Signalraumkonstellation unter Verwendung der unterschiedlichen Rückabbildungsschemata für das zweite Paar der aufeinanderfolgenden Teilblöcke aufweist, um die wiederverarbeiteten Teilblöcke zu erhalten.

16. Computerprogramm mit einem Programmcode zum Durchführen des Verfahrens gemäß Anspruch 14 oder des Verfahrens gemäß Anspruch 15, wenn das Programm auf einem Computer läuft.

**Revendications**

1. Appareil pour la fourniture d'un ensemble de symboles d'entrée de canal, l'appareil comprenant:

une unité de traitement (101) destinée à coder une pluralité de bits d'information, l'unité de traitement (101) étant opérationnelle pour fournir un bloc de code de longueur N;
un moyen (105) destiné à fournir une information de capacité de canal indiquant un nombre de bits d'information pouvant être atteint par symbole d'entrée de canal;
un contrôleur de séquence (209) destiné à diviser, à l'aide de l'information de capacité, le bloc de code en L sous-blocs k successifs, où k $\in$ 1...L, de longueur $\alpha_k N = m_k$, de sorte que chaque sous-block couvre un rapport

$\alpha_k \in [0,1]$ du bloc de code et que $\sum_{k=1}^{L} \alpha_k = 1$, et que $\dfrac{1}{\sum_{k=1}^{L} \alpha_k / m_k} = m_{IR}$ ;

un moyen (103, 207) destiné à traiter de manière différente les sous-blocs successifs, le moyen destiné à traiter de manière différente étant configuré pour moduler les bits des sous-blocs successifs sur une constellation spatiale de signal $2^m$-aire respective parmi un ensemble de constellations spatiales de signal $2^m$-aire différant quant à m, pour fournir l'ensemble de symboles d'entrée de canal à l'aide d'une première constellation spatiale de signal $2^m$-aire pour un premier des sous-blocs successifs, et d'une deuxième constellation spatiale de signal $2^m$-aire à m différent pour une deuxième paire des sous-blocs successifs, de sorte que le nombre moyen $m_{IR}$ de bits d'information par symbole d'entrée de canal soit plus proche de nombre de bits d'information pouvant être atteint par symbole d'entrée de canal qu'un nombre de bits d'information par symbole d'entrée de canal résultant lorsque la même constellation spatiale de signal $2^m$-aire est appliquée au nombre de sous-blocs successifs;
**caractérisé par le fait que** le moyen (103) destiné à traiter de manière différente est configuré pour mapper de manière différente les bits de la deuxième paire des sous-blocs successifs sur la constellation spatiale de signal $2^m$-aire respective à l'aide d'un schéma de mappage différent pour chacun des deuxièmes des sous-blocs successifs, pour ajuster un taux d'erreur et une complexité en termes de nombre requis d'itérations de décodage du côté du récepteur, pour obtenir l'ensemble de symboles d'entrée de canal.

2. Appareil selon la revendication 1, dans lequel le moyen (207) destiné à traiter de manière différente est opérationnel pour utiliser un code Gray, un schéma QAM, un schéma PSK ou un schéma QPSK.

3. Appareil selon la revendication 1 ou 2, dans lequel le moyen destiné à traiter de manière différente est opérationnel pour utiliser un schéma de modulation QAM ou PSK ou QPSK.

4. Appareil selon l'une quelconque des revendications précédentes, dans lequel l'unité de traitement (101) comprend un codeur (201) présentant un taux de code inférieur à 1 pour coder la pluralité de bits d'information, pour fournir des bits codés, et un entremêleur (203) destiné à entremêler les bits codés, pour fournir des bits entremêlés formant le bloc de code.

5. Appareil pour fournir une pluralité de bits d'information à partir d'un ensemble de symboles de sortie de canal résultant de la transmission d'un ensemble de symboles d'entrée de canal par un canal de communication, dans lequel l'ensemble de symboles d'entrée de canal comprend un nombre L de sous-ensembles successifs de symboles d'entrée de canal, le nombre L de sous-ensembles successifs de symboles d'entrée de canal étant obtenu à partir du traitement de manière différente de L sous-blocs k successifs, où k $\in$ 1...L, de longueur $\alpha_k N = m_k$ à partir d'un

23

bloc de code de longueur N, où $\alpha_k \in [0,1]$, $\sum_{k=1}^{L} \alpha_k = 1$, et $\dfrac{1}{\sum_{k=1}^{L} \alpha_k / m_k} = m_{IR}$, en ce que les bits des sous-blocs successifs sont modulés sur une constellation spatiale de signal $2^m$-aire respective parmi un ensemble de constellations spatiales de signal $2^m$-aire différant quant à m, à l'aide d'une première constellation spatiale de signal $2^m$-aire pour un premier des sous-blocs successifs, et d'une deuxième constellation spatiale de signal $2^m$-aire à m différent pour une deuxième paire des sous-blocs successifs, le bloc de code étant obtenu à partir du codage de la pluralité de bits d'information, où les bits du deuxième des sous-blocs successifs sont mappés sur la constellation spatiale de signal $2^m$-aire respective à l'aide d'un schéma de mappage différent pour chacun des deuxièmes des sous-blocs successifs, l'appareil comprenant:

un contrôleur de séquence configuré pour recevoir des informations de contrôle de séquence d'un émetteur éloigné, les informations de contrôle de séquence indiquant le nombre L de sous-ensembles de symboles de sortie de canal, et pour attribuer L groupes successifs de symboles de sortie de canal à L sous-ensembles successifs de symboles de sortie de canal;

un moyen (301, 403) destiné à retraiter de manière différente le nombre L de sous-ensembles successifs de symboles de sortie de canal par démodulation de manière différente des sous-ensembles successifs de symboles de sortie de canal à l'aide de la constellation spatiale de signal $2^m$-aire respective pour chaque sous-ensemble, pour obtenir L sous-blocs k retraités successifs; et

une unité de retraitement (303, 411) destinée à décoder les sous-blocs retraités successifs, pour obtenir la pluralité de bits d'information,

**caractérisé par le fait que** le moyen (301) destiné à retraiter de manière différente est configuré pour démapper de manière différente les sous-ensembles successifs de symboles de sortie de canal à partir de la constellation spatiale de signal respective à l'aide des différents schémas de démappage pour la deuxième paire de sous-blocs successifs, pour obtenir les sous-blocs retraités.

6. Appareil selon la revendication 5, dans lequel le moyen (301) destiné à retraiter de manière différente est opérationnel pour démoduler un sous-ensemble de symboles de sortie de canal à l'aide d'un schéma de démodulation QAM, d'un schéma de démodulation QPSK, ou d'un schéma de démodulation PSK, pour fournir un sous-bloc retraité de l'ensemble de sous-blocs retraités successifs.

7. Appareil selon la revendication 5 ou 6, dans lequel les schémas de démappage appartiennent à un schéma de décodage Gray, à un schéma de démappage QAM, à un schéma de démappage QPSK ou à un schéma de démappage PSK.

8. Appareil selon l'une quelconque des revendications 5 à 7, comprenant par ailleurs un moyen destiné à dé-précoder à l'aide d'un critère de maximum à posteriori ou d'un critère de probabilité maximale pour le dé-précodage.

9. Appareil selon l'une quelconque des revendications 5 à 8, dans lequel l'unité de retraitement (303) comprend un démêleur destiné à démêler l'ensemble de blocs retraités, pour obtenir les valeurs entremêlées, et un décodeur destiné à décoder les valeurs démêlées, pour obtenir la pluralité de bits d'information.

10. Appareil selon la revendication 9, dans lequel le décodeur est opérationnel pour déterminer les valeurs de sortie douces associées aux valeurs démêlées.

11. Appareil selon la revendication 10, dans lequel le décodeur est couplé au moyen destiné à dé-précoder de manière différente ou au moyen destiné à démapper de manière differente, pour réduire de manière itérative une erreur de démodulation ou une erreur de démappage.

12. Appareil selon l'une quelconque des revendications 5 à 11, dans lequel le moyen (405) destiné à dé-précoder de manière différente est opérationnel pour dé-précoder de manière itérative les sous-blocs successifs, dans lequel l'unité de retraitement (303) comprend un démêleur destiné à fournir des valeurs démêlées, et un décodeur destiné à décoder les valeurs démêlées, dans lequel le décodeur est opérationnel pour déterminer les valeurs de sortie douces associées aux valeurs démêlées, et dans lequel le décodeur est couplé au moyen (405) destiné à dé-précoder de manière différente, pour réduire de manière itérative une erreur de dé-précodage.

**13.** Appareil selon l'une quelconque des revendications 5 à 12, comprenant par ailleurs un contrôleur de traitement qui est opérationnel pour fournir des informations sur un schéma de démodulation associé avec un sous-ensemble actuel de symboles de sortie de canal au moyen destiné à démoduler de manière différente et pour fournir des informations sur un schéma de démappage associé au sous-ensemble actuel de symboles de sortie de canal au moyen destiné à démapper de manière différente.

**14.** Procédé pour fournir un ensemble de symboles d'entrée de canal, le procédé comprenant les étapes suivantes consistant à:

coder une pluralité de bits d'information, pour fournir un bloc de code de longueur N;
à l'aide de l'information de capacité, diviser le bloc de code en L sous-blocs k successifs, k ∈ 1...L, de longueur

$\alpha_k N = m_k$, de sorte que chaque sous-bloc k couvre un rapport $\alpha_k \in [0,1]$ du bloc de code et que $\sum_{k=1}^{L} \alpha_k = 1$ et

$$\frac{1}{\sum_{k=1}^{L} \alpha_k / m_k} = m_{IR} ,$$

traiter de manière différente les sous-blocs successifs en modulant les bits des sous-blocs successifs sur une constellation spatiale de signal $2^m$-aire parmi un ensemble de constellations spatiales de signal $2^m$-aire différant quant à m, pour fournir l'ensemble de symboles d'entrée de canal à l'aide d'une première constellation spatiale de signal $2^m$-aire pour un premier des sous-blocs successifs, et d'une deuxième constellation spatiale de signal $2^m$-aire à m différent pour une deuxième paire des sous-blocs successifs de sorte que le nombre moyen $m_{IR}$ de bits d'information par symbole d'entrée de canal soit plus proche du nombre de bits d'information pouvant être atteint par symbole d'entrée de canal qu'un nombre de bits d'information par symbole d'entrée de canal résultant lorsque la même constellation spatiale de signal $2^m$-aire est appliquée au nombre de sous-blocs successifs;
fournir des informations de capacité de canal indiquant un nombre de bits d'information pouvant être atteint par symbole d'entrée de canal;
**caractérisé par le fait que** l'étape de traitement de manière différente comprend par ailleurs le fait de mapper de manière différente les bits de la deuxième paire des sous-blocs successifs sur la deuxième constellation spatiale de signal $2^m$-aire respective à l'aide d'un schéma de mappage différent pour chacun des deuxièmes des sous-blocs successifs, vu une constellation de signal spécifique, pour ajuster un taux d'erreur et une complexité en termes de nombre d'itérations de décodage requis du côté du récepteur, pour obtenir l'ensemble de symboles d'entrée de canal.

**15.** Procédé pour fournir une pluralité de bits d'information à partir d'un ensemble de symboles de sortie de canal résultant de la transmission d'un ensemble de symboles d'entrée de canal par un canal de communication, dans lequel l'ensemble de symboles d'entrée de canal comprend un nombre L de sous-ensembles successifs de symboles d'entrée de canal, le nombre L de sous-ensembles successifs de symboles d'entrée de canal étant obtenu à partir du traitement de manière différente L sous-blocs k successifs, où k ∈ 1...L, de longueur $\alpha_k N = m_k$ à partir d'un bloc de code de longueur N, où $\alpha_k \in [0,1]$, $\sum_{k=1}^{L} \alpha_k = 1$, et $\frac{1}{\sum_{k=1}^{L} \alpha_k / m_k} = m_{IR}$, en ce que les bits des sous-blocs successifs sont modulés sur une constellation spatiale de signal $2^m$-aire respective parmi un ensemble de constellations spatiales de signal $2^m$-aire différant quant à m, à l'aide d'une première constellation spatiale de signal $2^m$-aire pour un premier des sous-blocs successifs, et d'une deuxième constellation spatiale de signal $2^m$-aire à m différent pour une deuxième paire de sous-blocs successifs, le bloc de code étant obtenu à partir du codage de la pluralité de bits d'information, où les bits de la deuxième paire de sous-blocs successifs sont mappés sur la constellation spatiale de signal $2^m$-aire respective à l'aide d'un schéma de mappage différent pour chacun des deuxièmes des sous-blocs successifs, le procédé comprenant les étapes suivantes consistant à:

recevoir les informations de contrôle de séquence d'un émetteur éloigné, les informations de contrôle de séquence indiquant le nombre L de sous-ensembles de symboles de sortie de canal;
attribuer L groupes successifs de symboles de sortie de canal à L sous-ensembles successifs de symboles de sortie de canal;

retraiter de manière différente le nombre L de sous-ensembles successifs de symboles de sortie de canal par démodulation de manière différente des sous-ensembles successifs de symboles de sortie de canal à l'aide de la constellation spatiale de signal $2^m$-aire respective pour chaque sous-ensemble, pour obtenir L sous-blocs k retraités successifs; et

décoder les sous-blocs retraités successifs, pour obtenir la pluralité de bits d'information,

**caractérisé par le fait que** l'étape de retraitement de manière différente comprend par ailleurs le fait de démapper de manière différente les sous-ensembles successifs de symboles de sortie de canal à partir de la constellation spatiale de signal respective à l'aide des différents schémas de démappage pour la deuxième paire de sous-blocs successifs, pour obtenir les sous-blocs retraités.

16. Programme d'ordinateur présentant un code de programme pour réaliser le procédé selon la revendication 14 ou le procédé selon la revendication 15 lorsque le programme est exécuté sur un ordinateur.

FIG 1

Set of processed values
comprising a successive
number of sub-sets of
processed values

Set of channel
input symbols

Information
bits

107        109

Processing
unit

Means for
differently
processing

to
Communication
channel

101

103

105

Means for providing
channel capacity
information

EP 1 876 745 B1

FIG 2

Set of channel
output symbols
comprising successive
sub-sets of channel
output symbols

Set of
successive sub-sets
of re-processed
values

from Communication
channel

Means for
differently
re-processing

Re-processing
unit

Information
bits

301

303

**FIG 3**

EP 1 876 745 B1

**FIG 4**

```
                403                    405                    409
                 │                      │                      │
from Communication  ┌──────────┐   ┌──────────┐   ┌──────────┐
     channel        │ Means for │   │ Means for │   │          │
        ──────────► │differently│──►│differently│──►│Deinterleaver│──┐
                    │ demapping │   │de-precoding│  │          │   │
                    └──────────┘   └──────────┘   └──────────┘   │
                         ▲              ▲                          │
                         ┊              ┊                          │
                         ┊         ┌──────────┐   ┌──────────┐   │
                         └┈┈┈┈┈┈┈┈│Interleaver│◄──│ Decoder  │◄──┘
                                   └──────────┘   └──────────┘
                                        │              │
                                       407            411
                                                       │
                                                       ▼
                                              Information bits
```

# FIG 5

# FIG 6

# FIG 7

## FIG 8

Transfer functions for parallel concatenated codes in the EXIT chart

## FIG 9

Gray          M16

For bit i=1: 16-QAM mappings with decision regions without a priori information and binary signal constellations selected by the ideal a priori information of the last 3 bits

# FIG 10

16QAM, $E_b/N_0 = 4$dB (AWGN), 6dB (Rayleigh)

Legend:
— Gray,AWGN
—•— Optimized; AWGN
—▽— Gray, Rayleigh
—+— Optimized, Rayleigh

(1 5/7), rate-1/2 convolutional code

Mutual information at output of demapper (y-axis)

Mutual information at input of demapper (x-axis)

Transfer functions of different mappings in the EXIT chart

# FIG 11

Parameter $\qquad$ A = 1, B = [1,1,...,1], D = $I_m$ and C as design

# FIG 12

Predoder before demultiplexing

# FIG 13

16QAM, $E_b/N_0 = 4$dB, precoder: $A = [1]$, $B = [1111]$, $D = I_4$

Legend:
- C = [1000]
- C = [1100]
- C = [1110]
- C = [1111]

Precoder operating before S/P

Gray mapping C = [0000]

(1 5/7) convolutional code

Mutual information at output of demapper (y-axis)

Mutual information at input of demapper (x-axis)

## FIG 14

1401

N code bits

| $\alpha_1 N$ | $\alpha_2 N$ |

$N/m_{IR}$ symbols

FIG 15

Mutual information at output of demapper (y-axis)

Mutual information at input of demapper (x-axis)

Legend:
— QPSK: $\alpha_1=1$, $\alpha_2=0$
— $\alpha_1=0.65$, $\alpha_2=0.35$
+ $\alpha_1=0.35$, $\alpha_2=0.65$
● 16-QAM: $\alpha_1=0$, $\alpha_2=1$

FIG 16

Mutual information at output of decoder (y-axis)

A priori mutual information at input of decoder (x-axis)

Legend:
— QPSK: $\alpha_1=1$, $\alpha_2=1$
— $\alpha_1=0.65$, $\alpha_2=0.35$
+ $\alpha_1=0.35$, $\alpha_2=0.65$
● 16-QAM: $\alpha_1=0$, $\alpha_2=1$

FIG 17

Mutual information at output of demapper (y-axis)

Mutual information at input of demapper (x-axis)

Legend:
--- $\alpha_1=1$, $\alpha_2=0$, $\alpha_3=0$
-▲- $\alpha_1=0$, $\alpha_2=1$, $\alpha_3=0$
-●- $\alpha_1=0$, $\alpha_2=0$, $\alpha_3=1$
— $\alpha_1=0.35$, $\alpha_2=0$, $\alpha_3=0.65$

FIG 18

FIG 19

FIG 20

# FIG 21

| MCS | Modulation | Code rate |
|-----|------------|-----------|
| 1 | GMSK | 0.53 |
| 2 | GMSK | 0.66 |
| 3 | GMSK | 0.8 |
| 4 | GMSK | 1 |
| 5 | 8-PSK | 0.37 |
| 6 | 8-PSK | 0.49 |
| 7 | 8-PSK | 0.76 |
| 8 | 8-PSK | 0.92 |
| 9 | 8-PSK | 1 |

Modulation and Coding Schemes (MCS) for EDGE

EP 1 876 745 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. LUBY ; M. MITZENMACHER ; A. SHOKROLLAHI ; D. SPIELMAN ; V. STEMANN.** Practical Loss-Resilient Codes. *Proc. 29th Annu. ACM Symp. Theory of Computing,* 1997, 150-159
- **B. FREY ; D. MACKAY.** Irregular turbo-like codes. *2nd Intern. Symposium on Turbo codes,* September 2000, 67-72
- **M. TÜCHLER ; J. HAGENAUER.** Exit charts of irregular codes. *Conference on Information Sciences and Systems (CISS),* March 2002
- **T. RICHARDSON ; R. URBANKE.** Design of low desity (sic) parity-check codes. *IEEE Transactions on Information Theory,* February 2001, vol. 47, 619-637
- **Pinar Örmeci et al.** Adapted Bit-Interleaved Coded Modulation. *IEE Transactions on Communications,* September 2001, 1572-1581
- Turbo trellis-coded modulation with time varying mixed mapping. **ONGGOSANUSI E N et al.** VTC FALL 2001. IEEE 54TH. VEHICULAR TECHNOLOGY CONFERENCE. PROCEEDINGS. ATLANTIC CITY, NJ, OCT. 7 - 11, 2001; [IEEE VEHICULAR TECHNOLGY CONFERENCE], NEW YORK, NY : IEEE, US. 07 October 2001, vol. 4, 2409-2413
- **A. GLAVIEUX ; S. LE GOFF ; C. BERROU.** Turbo-codes and high spectral efficiency modulation. *IEEE International Conference on Communications (ICC),* May 1994, 654-649
- **X. LI ; J. RITCEY.** Bit-interleaved coded modulation with iterative decoding using soft feedback. *Electronic Letters,* May 1998, vol. 34 (10), 942-943
- **J. SPEIDEL ; S. TEN BRINK ; R. YAN.** Iterative demapping and decoding for multilevel modulation. *Proc. IEEE Globecom Conference,* November 1998, 579-584
- **S. DOLINAR ; D. DIVSALAR ; F. POLLARA.** Serial concatenated modulation with rate-1 inner code. *Proc. IEEE Globecom Conference,* November 2000, 777-782
- **M. TÜCHLER.** Design of serially concatenated systems for long or short block lengths. *IEEE International Conference on Communications (ICC)*
- **G. MONTORSI ; S. BENEDETTO ; D. DIVSALAR ; F. POLLARA.** Serial concatenation of interleaved codes: Performance analysis, design, and iterative decoding. *IEEE Transactions on Information Theory,* May 1998, vol. 44 (3), 906-926
- **S. TEN BRINK.** Convergence behavior of iteratively decoded parallel concatenated codes. *IEEE Transactions on Communications,* October 2001, vol. 49 (10), 1727-1737